(19) Europäisches Patentamt
European Patent Office
Office européen des brevets

(11) **EP 4 625 139 A1**

(12) **EUROPEAN PATENT APPLICATION**
published in accordance with Art. 153(4) EPC

(43) Date of publication:
**01.10.2025 Bulletin 2025/40**

(21) Application number: **23909816.3**

(22) Date of filing: **23.11.2023**

(51) International Patent Classification (IPC):
**G06F 3/14** (2006.01)

(52) Cooperative Patent Classification (CPC):
**G06F 3/14; G06F 3/147**

(86) International application number:
**PCT/CN2023/133622**

(87) International publication number:
**WO 2024/139884 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211740315
09.03.2023 CN 202310254234**

(71) Applicant: **Huawei Technologies Co., Ltd.
Shenzhen, Guangdong 518129 (CN)**

(72) Inventor: **PENG, Jie
Shenzhen, Guangdong 518129 (CN)**

(74) Representative: **Gill Jennings & Every LLP
The Broadgate Tower
20 Primrose Street
London EC2A 2ES (GB)**

(54) **SCREEN MIRRORING DISPLAY METHOD, ELECTRONIC DEVICE, AND SYSTEM**

(57) Embodiments of this application provide a projection display method, an electronic device, and a system. The method includes: A first electronic device obtains a display pixel density of a second electronic device; the first electronic device adjusts a display pixel density of a first application from a first display pixel density to a second display pixel density based on the display pixel density of the second electronic device, where the first display pixel density is determined based on a display pixel density of the first electronic device; and the first electronic device projects the first application for display on the second electronic device based on the second display pixel density. According to the technical solution, a display effect of an application in a projection scenario can be optimized, to improve user experience.

400

FIG. 4

## Description

This application claims priorities to Chinese Patent Application No. 202211740315.0, filed with the China National Intellectual Property Administration on December 30, 2022 and entitled "PROJECTION DISPLAY METHOD", and to Chinese Patent Application No. 202310254234.8, filed with the China National Intellectual Property Administration on March 9, 2023 and entitled "PROJECTION DISPLAY METHOD, ELECTRONIC DEVICE, AND SYSTEM", which are incorporated herein by reference in their entireties.

## TECHNICAL FIELD

Embodiments of this application relate to the field of terminal technologies, and more specifically, to a projection display method, an electronic device, and a system.

## BACKGROUND

With application and popularization of smart devices, a projection function is increasingly widely used. For example, a user or a home usually has a plurality of electronic devices that can communicate with each other. The user may project, for display, an application or a display interface on a source device (for example, a mobile phone) onto a destination device (for example, a large-screen device like a smart TV, a central display screen of a head unit, or a notebook computer) that supports a projection function.

However, because specifications of a display of the destination device and a display of the source device are different, when the destination device displays content sent by the source device, a problem like a display failure or a poor display effect may occur, severely affecting user experience.

## SUMMARY

Embodiments of this application provide a projection display method, an electronic device, and a system, to optimize a projection effect of an application and improve user experience.

According to a first aspect, a projection display method is provided, applied to a first electronic device. The first electronic device is connected to a second electronic device for projection. The method includes: The first electronic device obtains a display pixel density of the second electronic device; the first electronic device adjusts a display pixel density of a first application from a first display pixel density to a second display pixel density based on the display pixel density of the second electronic device, where the first display pixel density is determined based on a display pixel density of the first electronic device; and the first electronic device projects the first application for display on the second electronic device based on the second display pixel density.

According to the method provided in this embodiment of this application, the display pixel density of the first application for projection display on the second electronic device may be adjusted, to adjust a size of an interface element, so as to adapt to a screen or a display specification of the second electronic device. Therefore, a display effect can be optimized, and user experience can be improved.

In a possible implementation, the first display pixel density is used for displaying the first application on the first electronic device, and the second display pixel density is used for displaying the first application on the second electronic device.

When the first application is displayed on the first electronic device, the application interface may be drawn based on the first display pixel density. When the first application is displayed on the second electronic device, the application interface may be drawn based on the second display pixel density. In this way, regardless of an electronic device on which the first application is displayed to a user, a corresponding screen can be adapted, to present an excellent display effect.

In a possible implementation, the first electronic device includes a projection management module, and the projection management module is accessible to any application on the first electronic device. That the first electronic device adjusts a display pixel density of a first application from a first display pixel density to a second display pixel density based on the display pixel density of the second electronic device includes: The first electronic device determines the second display pixel density based on the display pixel density of the second electronic device; and the first electronic device stores the second display pixel density in the projection management module.

The display pixel density used for projection display may be stored in the projection management module. In this way, when the first application needs to be projected and displayed on the second electronic device, the first application may read the display pixel density from the projection management module at any time.

In a possible implementation, the projection management module stores a first list, the first list includes an application identifier and a display pixel density used for projection onto the second electronic device that correspond to each of at least one application, and the at least one application includes the first application.

Because the projection management module is accessible to any application on the first electronic device, when an application needs to be projected and displayed on the second electronic device, the application may conveniently read, from the projection management module based on an application identifier, a display pixel density that corresponds to the application and that is used for projection onto the second electronic device.

In a possible implementation, that the first electronic device obtains a display pixel density of the second electronic device includes: The first electronic device obtains the display pixel density of the second electronic device via the projection management module; and/or

that the first electronic device determines the second display pixel density based on the display pixel density of the second electronic device includes: The first electronic device determines the second display pixel density via the projection management module.

Generally, an electronic device having a projection function includes a projection management module, and the projection management module performs a step of obtaining the display pixel density of the second electronic device and/or a step of determining the second display pixel density. Therefore, compatibility is good.

In a possible implementation, the first electronic device further includes a projection application, and the projection application is used to implement projection between the first electronic device and the second electronic device.

That the first electronic device obtains a display pixel density of the second electronic device includes: The first electronic device obtains the display pixel density of the second electronic device via the projection application; and/or that the first electronic device determines the second display pixel density based on the display pixel density of the second electronic device includes: The first electronic device determines the second display pixel density via the projection application.

The additional projection application performs the step of obtaining the display pixel density of the second electronic device and/or the step of determining the second display pixel density. Therefore, scalability is good.

In a possible implementation, the first application includes a first resource module, the first resource module runs in a process of the first application, and before the first electronic device projects the first application for display on the second electronic device based on the second display pixel density, the method further includes: The first electronic device obtains the second display pixel density from the projection management module via the first resource module.

When different applications are projected onto the second electronic device, resource modules in application processes may obtain, from the projection management module, respective corresponding display pixel densities used for projection display, to draw application interfaces.

In a possible implementation, the second display pixel density is equal to the display pixel density of the second electronic device.

When the first application is projected and displayed on the second electronic device, a display interface of the first application may automatically adapt to the display pixel density of the second electronic device, to optimize a display effect.

In a possible implementation, that the first electronic device adjusts a display pixel density of a first application from a first display pixel density to a second display pixel density based on the display pixel density of the second electronic device includes: The first electronic device adjusts the display pixel density of the first application from the first display pixel density to the second display pixel density based on the display pixel density of the second electronic device and an optimization coefficient.

The optimization coefficient may be used to correct and adjust the display pixel density of the second electronic device, to obtain a second display pixel density that better adapts to a screen of the second electronic device.

In a possible implementation, the second display pixel density is equal to a product of the optimization coefficient and the display pixel density of the second electronic device.

In a possible implementation, that the first electronic device adjusts a display pixel density of a first application from a first display pixel density to a second display pixel density based on the display pixel density of the second electronic device includes: The first electronic device adjusts the display pixel density of the first application from the first display pixel density to the second display pixel density based on the display pixel density of the second electronic device, the display pixel density of the first electronic device, and the optimization coefficient.

The optimization coefficient may be used to correct and adjust the display pixel density of the second electronic device. In addition, an interface of the first application is first drawn on the first electronic device and then projected onto the second electronic device. Therefore, the display pixel density of the first electronic device affects a display effect of the first application on the second electronic device. In this embodiment of this application, the display pixel density of the first electronic device is considered when the second display pixel density is determined, so that an error caused by the display pixel density of the first electronic device can be reduced or eliminated, to obtain a second display pixel density that better adapts to the screen of the second electronic device.

In a possible implementation, the display pixel density of the first electronic device includes an actual display pixel density and a default display pixel density, and the second display pixel density is equal to a product of the display pixel density of the second electronic device, the optimization coefficient, and a ratio of the actual display pixel density of the first electronic device to the default display pixel density of the first electronic device.

In a possible implementation, the optimization coefficient is determined based on at least one of a type of the first application, a user type, and a projection scenario.

Different applications may correspond to different optimization coefficients, to obtain different display pixel densities used to draw an application interface. In this way, when different applications are projected onto the second electronic device for display, different display effects may be achieved.

Different users may correspond to different optimization coefficients, to obtain different display pixel densities used to draw the application interface. In this way, different users may have different display effects when using the projection function.

Different projection scenarios may correspond to different optimization coefficients, to obtain different display pixel densities used to draw the application interface. In this way, when the projection function is used in different scenarios, different display effects may be achieved.

In a possible implementation, when the interface element in the first application needs to be scaled up on the second electronic device, the optimization coefficient is greater than 1; or when the interface element in the first application needs to be scaled down on the second electronic device, the optimization coefficient is less than 1.

In a possible implementation, the method further includes: The first electronic device adjusts a display pixel density of a second application from a third display pixel density to a fourth display pixel density based on the display pixel density of the second electronic device, where the third display pixel density is determined based on the display pixel density of the first electronic device; and the first electronic device switches to display the second application on the second electronic device based on the fourth display pixel density.

On a same projection destination terminal, different applications may be switched for display, and display effects of different applications may be different.

In a possible implementation, the first electronic device includes the projection management module, and the projection management module is accessible to any application on the first electronic device. The second display pixel density and the fourth display pixel density are stored in the projection management module, the first application includes the first resource module, the first resource module runs in the process of the first application, the second application includes a second resource module, and the second resource module runs in a process of the second application.

Before the first electronic device projects the first application for display on the second electronic device based on the second display pixel density, the method further includes: The first electronic device obtains the second display pixel density from the projection management module via the first resource module.

Before the first electronic device switches to display the second application on the second electronic device based on the fourth display pixel density, the method further includes: The first electronic device obtains the fourth display pixel density from the projection management module via the second resource module.

In a possible implementation, the first electronic device is further connected to a third electronic device for projection, and the method further includes: The first electronic device obtains a display pixel density of the third electronic device; the first electronic device adjusts a display pixel density of a third application from a fifth display pixel density to a sixth display pixel density based on the display pixel density of the third electronic device, where the fifth display pixel density is determined based on the display pixel density of the first electronic device; and the first electronic device projects the third application for display on the third electronic device based on the sixth display pixel density.

When the first electronic device is connected to a plurality of projection destination terminals, a plurality of applications may be displayed on different projection destination terminals, and each application can automatically adjust a display effect to adapt to a display pixel density of a respective projection destination terminal.

In a possible implementation, the first electronic device includes the projection management module, and the projection management module is accessible to any application on the first electronic device. The second display pixel density and the sixth display pixel density are stored in the projection management module, the first application includes the first resource module, the first resource module runs in the process of the first application, the third application includes a third resource module, and the third resource module runs in a process of the third application.

Before the first electronic device projects the first application for display on the second electronic device based on the second display pixel density, the method further includes: The first electronic device obtains the second display pixel density from the projection management module via the first resource module.

Before the first electronic device projects the third application for display on the third electronic device based on the sixth display pixel density, the method further includes: The first electronic device obtains the sixth display pixel density from the projection management module via the third resource module.

In a possible implementation, the first electronic device is further connected to a third electronic device for projection, and the method further includes: The first electronic device obtains a display pixel density of the third electronic device; the first electronic device determines a seventh display pixel density based on the display pixel density of the third electronic device; and when a projection interface of the first application is switched from the first electronic device to the third electronic device, the first electronic device projects the first application for display on the third electronic device based on the seventh display pixel density.

A same application is displayed on different projection destination terminals, and the application can automatically adjust a display effect to adapt to display pixel densities of different projection destination terminals.

In a possible implementation, the first electronic device includes the projection management module, and the projection management module is accessible to any application on the first electronic device. The second display pixel density and the seventh display pixel density are stored in the projection management module, the first application includes the first resource module, and the first resource module runs in the process of the first application.

Before the first electronic device projects the first application for display on the second electronic device based on the second display pixel density, the method further includes: The first electronic device obtains the second display pixel density from the projection management module via the first resource module.

Before the first electronic device projects the first application for display on the third electronic device based on the seventh display pixel density, the method further includes: The first electronic device obtains the seventh display pixel density from the projection management module via the first resource module.

In a possible implementation, the display pixel density measured in dots per inch DPI.

According to a second aspect, an apparatus is provided. The apparatus is included in an electronic device, and the apparatus has a function of implementing behavior in the first aspect and any one of the possible implementations of the first aspect.

The function may be implemented by hardware, or may be implemented by hardware executing corresponding software. The hardware or the software includes one or more modules or units corresponding to the function, for example, a display module or unit, an obtaining module or unit, a receiving module or unit, and a processing module or unit.

According to a third aspect, an electronic device is provided, including one or more processors and one or more memories. The one or more memories store one or more computer programs. The one or more computer programs include instructions. When the instructions are executed by the one or more processors, the electronic device is enabled to perform the method according to the first aspect and any one of the possible implementations of the first aspect.

According to a fourth aspect, a computer-readable storage medium is provided, including computer instructions. When the computer instructions are run on an electronic device, the electronic device is enabled to perform the method according to the first aspect and any one of the possible implementations of the first aspect.

According to a fifth aspect, a computer program product including instructions is provided. When the computer program product runs on a computer, the computer is enabled to perform the method according to the first aspect and any one of the possible implementations of the first aspect.

According to a sixth aspect, a chip is provided. The chip includes a processor and a data interface, and the processor reads, through the data interface, instructions stored in a memory, to perform the method according to the first aspect and any one of the possible implementations of the first aspect.

Optionally, in an implementation, the chip may further include the memory, and the memory stores the instructions. The processor is configured to execute the instructions stored in the memory; and when the instructions are executed, the processor is configured to perform the method according to the first aspect and any one of the possible implementations of the first aspect.

The chip may be specifically a field programmable gate array or an application-specific integrated circuit.

According to a seventh aspect, a projection system is provided, including a first electronic device and a second electronic device. The first electronic device is connected to the second electronic device for projection. The first electronic device is configured to perform the method according to the first aspect and any one of the possible implementations of the first aspect, to perform projection display on the second electronic device.

For beneficial effects of the apparatuses in the second aspect to the seventh aspect, refer to the beneficial effect of the method described in the first aspect. Details are not described herein again.

## BRIEF DESCRIPTION OF DRAWINGS

FIG. 1 is a diagram of a system according to an embodiment of this application;
FIG. 2 is a diagram of a hardware structure of an electronic device according to an embodiment of this application;
FIG. 3 is a diagram of a software architecture of an electronic device according to an embodiment of this application;
FIG. 4 is a schematic flowchart of a projection display method according to an embodiment of this application;
FIG. 5 is a schematic flowchart of a projection display method according to an embodiment of this application;
FIG. 6 is a block diagram of a structure of an electronic device to which a projection display method is applied according to an embodiment of this application;
FIG. 7A and FIG. 7B are a schematic flowchart of a projection display method according to an embodiment of this application;

FIG. 8(a) to FIG. 8(d) are a diagram of a display effect of a projection display method according to an embodiment of this application;

FIG. 9(a) and FIG. 9(b) are a diagram of a display effect of a projection display method according to an embodiment of this application;

FIG. 10A and FIG. 10B are a schematic flowchart of a projection display method according to an embodiment of this application;

FIG. 11(a) and FIG. 11(b) are a diagram of another display effect of a projection display method according to an embodiment of this application;

FIG. 12A and FIG. 12B are a schematic flowchart of another projection display method according to an embodiment of this application;

FIG. 13(a) and FIG. 13(b) are a diagram of still another display effect of a projection display method according to an embodiment of this application;

FIG. 14A and FIG. 14B are a schematic flowchart of still another projection display method according to an embodiment of this application;

FIG. 15 is a block diagram of a structure of an apparatus according to an embodiment of this application; and

FIG. 16 is a block diagram of a structure of an electronic device according to an embodiment of this application.

**DESCRIPTION OF EMBODIMENTS**

The following describes technical solutions of embodiments in this application with reference to accompanying drawings.

It should be noted that, in descriptions of embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists. In a calculation formula, "/" indicates division. For example, C/D indicates a value of C divided by D or a ratio of C to D. In addition, in descriptions of embodiments of this application, "a plurality of" means two or more, and "at least one" and "one or more" mean one, two, or more. The singular expression forms "one", "a", "the", "the foregoing", "this", and "the one" are intended to include an expression form like "one or more", unless the opposite is explicitly indicated in the context thereof.

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

For ease of understanding, the following first explains and describes technical terms in this application.

Projection means that a screen image of a display device is projected (or cast) onto another display device for display, so that a small-screen image can be displayed on a large-screen device.

A projection source terminal is an electronic device that projects a display interface of the projection source terminal, and may also be referred to as a source device.

A projection destination terminal is an electronic device that receives projection from the projection source terminal and displays the display interface of the projection source terminal, and may also be referred to as a destination device.

A projection application is an application used to project the display interface on the projection source terminal to the projection destination terminal for display. Projection applications installed on the projection source terminal and the projection destination terminal may be the same or may be different. For example, when a same projection application is installed on the projection source terminal and the projection destination terminal, bidirectional projection can be implemented. When different projection applications are installed on the projection source terminal and the projection destination terminal, unidirectional projection can be implemented. The projection application on the projection destination terminal may only be used to carry the projection interface.

A pixel (pixel, px) is a minimum unit that can be displayed on a screen, and the pixel has no fixed physical length.

Screen resolution is a quantity of pixels on a screen in vertical and horizontal directions, and is measured in px. For screens of a same size, when screen resolution is low (for example, 640*480), fewer pixels are displayed on the screen, and a size of a single pixel is large; and when screen resolution is high (for example, 1600*1200), more pixels are displayed on the screen, and a size of a single pixel is small.

An inch (inch) is a fixed physical length, and 1 inch=25.4 millimeters.

A display pixel density is a quantity of pixels that can be sampled, displayed, and output per inch. The display pixel density describes a pixel density during software display, is a software attribute, and can be configured. In this application, the display pixel density is measured in dots per inch (dots per inch, DPI). For ease of description, DPI is usually directly used to represent the display pixel density. The DPI may be a fixed parameter, or may be obtained through calculation based on a screen size and screen resolution.

A device independent pixel (device independent pixel, DP or dp) is also referred to as a device-independent pixel, and is set to allow a length set by a developer to adapt to different screen resolution with different quantities of pixels. The device independent pixel dp changes a quantity of pixels of a control length based on the screen.

1 dp is a virtual pixel unit, and 1 dp is approximately equal to 1 pixel on a mediumdensity screen (a reference density is 160 dpi). Specifically, when a display pixel density of a device is 160 dpi, dp is equivalent to px, that is, 1 dp=1 px, and 1 dp represents a length of 1 px when the display pixel density of the screen is 160 dpi. When the display pixel density of the device is M dpi, 1 dp=(M/160) px. Herein, 160 dpi may be referred to as a reference display pixel density (which may be referred to as a reference density for short). It may be understood that DP is a physical size and does not change. In different screen resolution, physical lengths of 1 dp are the same and are 1/160 inches in physical size, but quantities of pixels are different. For example, if a length of a control is set to 1 dp, a length of the control on a screen whose display pixel density is 160 dpi is 1 px, and a length of the control on a screen whose display pixel density is 240 dpi is 240/160=1.5 px.

A screen pixel density may indicate a quantity of physical pixels per inch of the screen. The screen pixel density describes a quantity of pixels of a display, is an inherent hardware physical feature of the display, and cannot be changed. The screen pixel density is measured in pixels per inch (pixels per inch, PPI). The PPI and the DPI may be mutually converted. In this application, the DPI may alternatively be obtained by converting the PPI.

The reference density mentioned above is used for development, and therefore may also be referred to as a reference density used for development in embodiments of this application. In addition, it may be understood that the units of the display pixel density and the device independent pixel described above are merely examples. Similar units may alternatively be defined in another operating system to represent the display pixel density and the device independent pixel. The method provided in this application is still applicable. In addition, a value of the reference density mentioned above is merely an example, and another value may alternatively be defined as the reference density in another operating system. This is not limited in embodiments of this application.

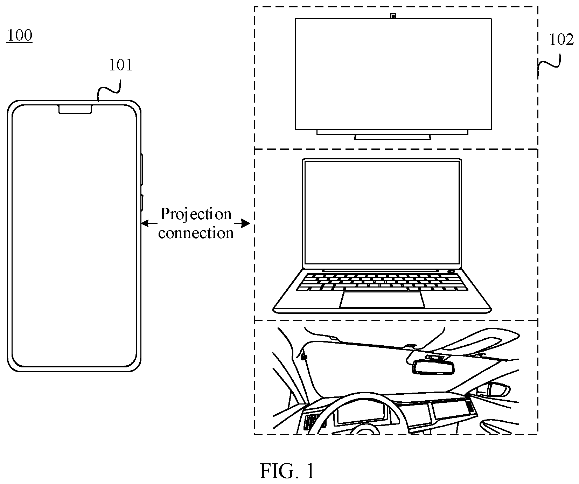

FIG. 1 is a diagram of a system according to an embodiment of this application.

As shown in FIG. 1, the system 100 includes a plurality of electronic devices, for example, includes a first electronic device 101 and at least one second electronic device 102. The first electronic device 101 is connected to each of the at least one second electronic device 102 for projection, the first electronic device 101 is configured to project an interface on a display of the first electronic device 101 onto a display of the second electronic device 102 for display, and the second electronic device 102 is configured to receive and display the interface projected by the first electronic device 101.

In some embodiments, the first electronic device 101 may also be referred to as a projection source terminal or a source device, and the second electronic device 102 may also be referred to as a projection destination terminal or a destination device. For ease of description, in embodiments of this application, the interface projected by the first electronic device 101 may be referred to as a first interface or a display interface, and an interface projected by the projection source terminal and displayed by the second electronic device 102 may be referred to as a second interface or a projection interface.

In embodiments of this application, the first electronic device 101 and the second electronic device 102 may establish a projection connection in a wired or wireless manner. Based on the established projection connection, the first electronic device 101 may project the display interface of the first electronic device 101 onto the display of the second electronic device 102 for display. When the system 100 includes a plurality of second electronic devices 102, the first electronic device 101 may project the display interface onto the plurality of second electronic devices 102 for display. Projection interfaces displayed by the plurality of second electronic devices 102 may be the same or may be different. This is not limited in embodiments of this application.

In some embodiments, based on the established projection connection, the second electronic device 102 may alternatively project the display interface of the second electronic device 102 onto the display of the first electronic device 101 for display. In this case, the second electronic device 102 is a projection source terminal, the first electronic device 101 is a projection destination terminal, an interface projected by the second electronic device 102 is a display interface, and an interface received and displayed by the first electronic device 101 is a projection interface. When the system 100 includes a plurality of second electronic devices 102, the plurality of second electronic devices 102 may project display interfaces onto the first electronic device 101 for display. The first electronic device 101 may simultaneously display or switch to display the interfaces projected by the plurality of second electronic devices 102. This is not limited in embodiments of this application.

For ease of description, this embodiment of this application is described by using an example in which the first electronic device 101 is the projection source terminal and the second electronic device 102 is the projection destination terminal. However, this application is not limited thereto.

When the first electronic device 101 establishes a connection to the second electronic device 102 in a wireless manner, a used wireless communication protocol may be a wireless fidelity (wireless fidelity, Wi-Fi) protocol, a Bluetooth (Bluetooth) protocol, a ZigBee (ZigBee) protocol, a near field communication (near field communication, NFC) protocol, a voice over Internet protocol (voice over Internet protocol, VoIP), or the like; or may be various cellular network protocols, for example, a global system for mobile communications (global system for mobile communications, GSM) protocol, a code division multiple access (code division multiple access, CDMA) protocol, a wideband code division multiple access (wideband code division multiple access, WCDMA) protocol, a time-division code division multiple access (time-division code division multiple access, TD-SCDMA) protocol, a general packet radio service (general packet radio service, GPRS) protocol, a long term evolution (long term evolution, LTE) protocol, a worldwide interoperability for microwave access (worldwide interoperability for microwave access, WiMAX) protocol, a 5th generation (5th generation, 5G) mobile communication protocol, or the like. This is not specifically limited in this embodiment of this application.

The electronic device in embodiments of this application, for example, the first electronic device 101 or the second electronic device 102, may be a mobile phone, a tablet computer, a vehicle-mounted device (for example, a head unit), a wearable device, an augmented reality (augmented reality, AR)/virtual reality (virtual reality, VR) device, a notebook computer, a personal computer (personal computer, PC), an ultra-mobile personal computer (ultra-mobile personal computer, UMPC), a netbook, a personal digital assistant (personal digital assistant, PDA), a smart home device (for example, a smart screen or a smart television), and another electronic device having a display. A specific type of the electronic device is not limited in embodiments of this application. Device forms of the first electronic device 101 and the second electronic device 102 may be the same or different. For example, the first electronic device 101 may be a small-screen device, for example, a mobile phone, or a tablet computer, and the second electronic device 102 may be a large-screen device, for example, a PC, a smart television, or a head unit.

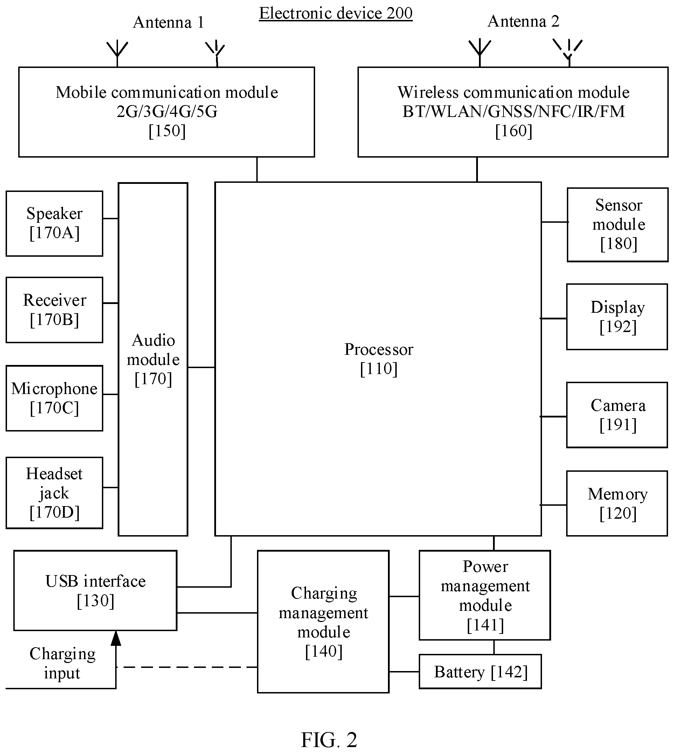

For example, the electronic device is a mobile phone. FIG. 2 is a diagram of a hardware structure of an electronic device according to an embodiment of this application.

As shown in FIG. 2, an electronic device 200 may include: a processor 110, a memory 120, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 191, a display 192, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 200. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory, to avoid repeated access and reduce waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

For example, the processor 110 may communicate with a touch sensor through the I2C bus interface, to implement a touch function of the electronic device 200. The processor 110 may communicate with the camera 191 through a CSI interface, to implement a photographing function of the electronic device 200. The processor 110 may communicate with the display 192 through a DSI interface, to implement a display function of the electronic device 200.

It may be understood that the interface connection relationship between the modules shown in this embodiment of this application is merely an example, and does not constitute a limitation on the structure of the electronic device 200. In some other embodiments of this application, the electronic device 200 may alternatively use an interface connection manner different from that in the foregoing embodiment, or a combination of a plurality of interface connection manners.

The charging management module 140 is configured to receive a charging input from a charger. The power management module 141 is configured to connect to the battery 142. The charging management module 140 supplies power to the electronic device 200 through the power management module 141 while charging the battery 142. The power management module 141 may be further configured to monitor parameters such as a battery capacity, a quantity of battery cycles, and a battery health status.

A wireless communication function of the electronic device 200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 200. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 200 may implement a display function through the GPU, the display 192, the application processor, and the like. The GPU is a microprocessor used for image processing, and is connected to the display 192 and the application processor. The GPU is configured to: perform mathematical and geometric computation, and render an image. The processor 110 may include one or more GPUs, which execute program instructions to generate or change display information.

The display 192 is configured to display an image, a video, and the like. The display 192 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 192, where N is a positive integer greater than 1.

The electronic device 200 may implement a photographing function by using the ISP, the camera 191, the video codec, the GPU, the display 192, the application processor and the like. The ISP is configured to process data fed back by the camera 191. The camera 191 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. In some embodiments, the electronic device 200 may include one or N cameras 191, where N is a positive integer greater than 1.

The video codec is configured to compress or decompress a digital video. The electronic device 200 may support one or more video codecs. Therefore, the electronic device 200 may play or record videos in a plurality of coding formats, for example, moving picture experts group (moving picture experts group, MPEG)-1, MPEG-2, MPEG-3, and MPEG-4.

The memory 120 is configured to store data and/or instructions.

The memory 120 may include an internal memory. The internal memory is configured to store computer-executable program code, and the executable program code includes instructions. The processor 110 runs the instructions stored in the internal memory, to perform various function applications and data processing of the electronic device 200. The internal memory may include a program storage area and a data storage area. The program storage area may store an operating system. The program storage area may further store one or more applications (for example, Gallery or Contacts) and the like. The data storage area may store data (for example, an image or a contact) or the like created during use of the electronic device 200. In addition, the internal memory may include a high-speed random access memory, and may further include a non-volatile memory, for example, one or more disk storage devices, a flash device, or a universal flash storage (universal flash storage, UFS). In some embodiments, the processor 110 may run the instructions stored in the internal memory and/or the instructions stored in the memory disposed in the processor 110, so that the electronic device 200 performs the projection display method provided in embodiments of this application, and various function applications and data processing.

The memory 120 may further include an external memory, for example, a micro SD card, to extend a storage capability of the electronic device 200. The external memory may communicate with the processor 110 through an external memory interface, to implement a data storage function. For example, files such as music and videos are stored in the external memory.

The electronic device 200 may implement an audio function, for example, music playing and recording, through the audio module 170, the speaker 170A, the receiver 170B, the microphone 170C, the headset jack 170D, the application processor, or the like.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

In addition, the electronic device 200 may further include one or more components such as a button, a motor, an indicator, and a SIM card interface. This is not limited in embodiments of this application.

It may be understood that the structure shown in this embodiment of this application does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented as hardware, software, or a combination of software and hardware.

The diagram of the possible hardware structure of the electronic device 200 is described above. A software system of the electronic device 200 may use a layered architecture, an eventdriven architecture, a microkernel architecture, a micro service architecture, or a cloud architecture. In embodiments of this application, an Android® system with a layered architecture is used as an example to describe a software structure of the electronic device 200.

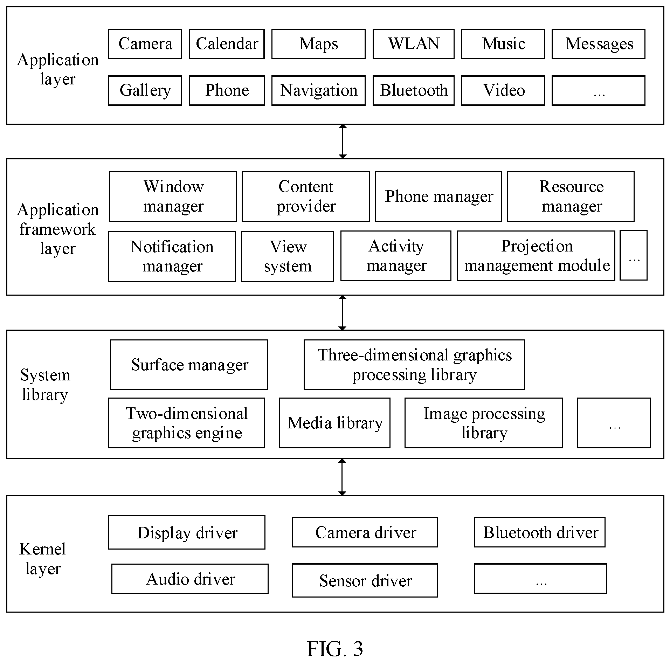

FIG. 3 is a block diagram of a software structure of an electronic device according to an embodiment of this application. As shown in FIG. 3, a layered architecture divides software into several layers, and each layer has a clear role and task. The layers communicate with each other through a software interface. In some embodiments, the Android® system is divided into four layers: an application layer, an application framework layer, a system runtime library layer (including a system library and an Android runtime (Android runtime)), and a kernel layer from top to bottom. A hardware layer is below the kernel layer.

The application layer may include a series of application (application, APP) packages. As shown in FIG. 3, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions. As shown in FIG. 3, the application framework layer may include a window manager, a content provider, a phone manager, a resource manager, a notification manager, an activity manager, a view system, and the like.

The window manager is configured to manage a window program. The window manager may obtain a size of a display, determine whether there is a status bar, perform screen locking, take a screenshot, and the like.

The content provider is configured to: store and obtain data, and enable the data to be accessible to an application. The data may include a video, an image, audio, calls that are made and answered, a browsing history and bookmarks, an address book, and the like.

The phone manager is configured to provide a communication function of the electronic device 200, for example, management of a call status (including answering, declining, or the like).

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the terminal device vibrates, or an indicator light blinks.

The activity manager is configured to manage a life cycle of each application, and is also referred to as an activity manager service (activity manager service, AMS). The AMS is a core service in the operating system. The AMS is responsible for starting, switching, and scheduling four components in the system, and managing and scheduling application processes. For example, an application usually runs in an operating system in a form of an activity (activity), and the activity manager may schedule an activity process of the application to manage a life cycle of each application.

The view system includes visual controls such as a control for displaying a text and a control for displaying an image. The view system may be configured to construct a display interface of an application. The display interface may include one or more views. For example, a display interface including an SMS message notification icon may include a text display view and an image display view.

The resource manager provides various resources for the application, such as an icon, an image, a layout file, an audio/video file, a localized character string, a color value, and a size. The resource manager includes a resource (resource) module corresponding to each application. Each resource module is configured to manage a display resource (for example, a font, an image, or a color) of a corresponding application and calculate how to display the resource. Each resource module runs in a process of a corresponding application, and processes of different applications are isolated from each other. If the application specifies different resources to be displayed for different resolution, the resource module can dynamically load resources in different directories based on the screen resolution.

In this embodiment of this application, the application framework layer further includes a projection management module (for example, a multi-screen framework). The projection management module is configured to process and control processing logic of a service between different displays (displays) in a projection scenario. In other words, the projection management module is configured to manage a relationship between different displays, for example, control one device of a plurality of projection destination terminals to display a projection interface, or control a plurality of devices of a plurality of projection destination terminals to display a same projection interface or different projection interfaces, or control both the projection source terminal and the projection destination terminal to display an interface, or control only a projection destination terminal to display a projection interface. The projection management module is accessible to any application installed on the electronic device 100.

The system runtime library layer (libraries) may be divided into two parts: a system library and an Android runtime.

The Android runtime is an Android running environment and includes a kernel library and a virtual machine. The Android runtime is responsible for scheduling and management of an Android system. The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library is a support of an application framework, and may include a plurality of functional modules, for example, a surface manager (surface manager), a media library (media library), a two-dimensional graphics engine (for example, SGL), a three-dimensional graphics processing library (for example, OpenGL ES), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software, and is configured to provide essential functions of an operating system, such as file management, memory management, process management, and a network protocol stack. The kernel layer includes at least a display driver, a camera driver, an audio driver, a sensor driver, a Bluetooth driver, and the like.

For ease of understanding, in the following embodiments of this application, the electronic device having the structures shown in FIG. 2 and FIG. 3 is used as an example to describe in detail the projection display method provided in embodiments of this application with reference to accompanying drawings and application scenarios.

With application and popularization of smart devices, a projection function is increasingly widely used, and there are more projection scenarios, including but not limited to Super Home Screen, multi-screen collaboration, HiCar, and mobile phone projection. For example, a user or a home usually has a plurality of electronic devices that can communicate with each other. The user may project, for display, an application or a display interface on a source device (for example, a mobile phone) onto a destination device (for example, a large-screen device like a smart TV, a central display screen of a head unit, or a notebook computer) that supports a projection function.

However, the application in the source device is usually developed based on a display specification of the source device, and it is difficult to directly adapt to a display specification of the destination device during projection. A common practice is as follows: After the source device performs projection, a window on which the application is projected onto the destination device is first displayed based on a display specification of the source device, and then the window is stretched to N times of an original size (N is greater than 1, for example, N=2) based on a specification ratio of the source device to the destination device. In addition, the application interface is not redrawn, so that the interface display is scaled up by N times. In other words, when projection is performed in this manner, only a display size of the application is stretched to be consistent with a window size of the destination device, and a display pixel density used by the display application remains unchanged, and is still adapted to a display pixel density of the source device. In this way, the application interface is scaled up by N times on the destination device, which is equivalent to directly scaling the image up. Consequently, the application interface is blurred on the destination device, resulting in a poor projection display effect and severely affecting user experience.

Therefore, an embodiment of this application provides a projection display method, to optimize a display effect of an application in a projection scenario, and improve user experience.

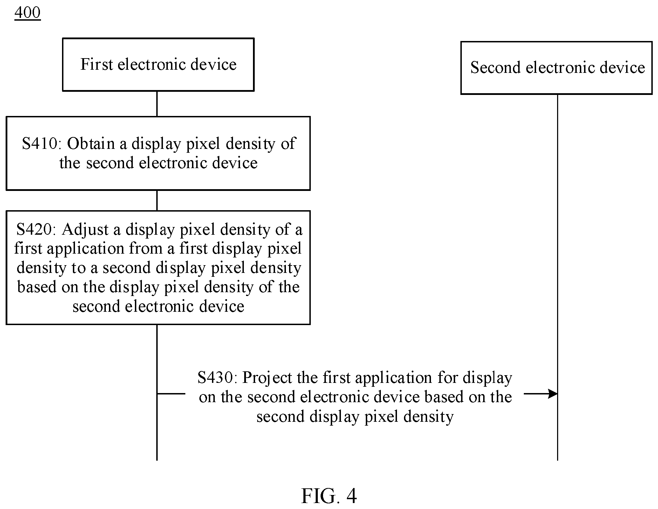

FIG. 4 is a schematic flowchart of a projection display method according to an embodiment of this application.

The method 400 shown in FIG. 4 is applied to a projection system. The projection system may include a first electronic device and a second electronic device, and the first electronic device is connected to the second electronic device for projection. The first electronic device may be, for example, the first electronic device 101 shown in FIG. 1, and the second electronic device may be, for example, the second electronic device 102 shown in FIG. 1. The first electronic device is a source device (namely, a projection source terminal) in a projection scenario, and the second electronic device is a destination device (namely, a projection destination terminal) in the projection scenario. An operating system of the first electronic device may be the same as or different from an operating system of the second electronic device. This is not specifically limited in this application. In this embodiment of this application, the method 400 is mainly performed by the first electronic device in the projection system. As shown in FIG. 4, the method 400 includes step S410 to step S430. The following provides detailed descriptions with reference to the accompanying drawings.

S410: The first electronic device obtains a display pixel density of the second electronic device.

In this embodiment of this application, the display pixel density of the second electronic device is measured in DPI. In this embodiment of this application, a description of "the DPI of the second electronic device" may be used to represent "the display pixel density of the second electronic device".

In this embodiment of this application, the first electronic device may directly or indirectly obtain the display pixel density of the second electronic device.

In an example, the first electronic device may receive the display pixel density of the second electronic device that is sent by the second electronic device. In other words, the second electronic device may first obtain the display pixel density of the second electronic device, and then send the display pixel density of the second electronic device to the first electronic device.

In a possible implementation, the display pixel density of the second electronic device may be prestored as a fixed parameter. To be specific, the display pixel density of the second electronic device is stored in a memory of the second electronic device before the second electronic device is delivered from a factory. In this way, the second electronic device may directly read the parameter from the memory and then send the parameter to the first electronic device. For example, the display pixel density of the second electronic device may be 160 dpi, 240 dpi, 320 dpi, or the like.

In another possible implementation, the display pixel density of the second electronic device may be determined based on a display specification of the second electronic device. For example, the display specification of the second electronic device may include a screen size and screen resolution. Herein, the screen size may be represented as a length*a width (for example, 27.03 centimeters*20.27 centimeters or 39.44 centimeters*16.56 centimeters) or a length of a diagonal of a screen (for example, 13 inches, 15 inches, or 6.1 inches). The screen resolution is represented as a quantity of pixels in a horizontal direction and a vertical direction, for example, a pixel width*a pixel height (for example, 2532*1170). The second electronic device may calculate a value of the pixel width/the screen length, a value of the pixel height/the screen width, or a value of $\sqrt{\text{pixel width}^2 + \text{pixel height}^2}$ /the length of the diagonal of the screen, and use the value as the display pixel density of the second electronic device. It may be understood that units of the length and the width listed in the foregoing examples are merely examples. In another example, another length unit, for example, a millimeter or an inch, may alternatively be used. Similarly, a unit of the length of the diagonal is merely an example. In another example, another length unit, for example, a millimeter or a centimeter, may alternatively be used. During specific calculation, conversion may be performed based on an actual unit type of the parameter.

In another example, the first electronic device may determine the display pixel density of the second electronic device based on the display specification of the second electronic device. In other words, the second electronic device may send the display specification (for example, including the screen size and the screen resolution) of the second electronic device to the first electronic device, and then the first electronic device determines the display pixel density of the second electronic device. A manner in which the first electronic device determines the display pixel density of the second electronic device based on the display specification of the second electronic device is the same as the manner in which the second electronic device determines the display pixel density of the second electronic device based on the display specification of the second electronic device described in the foregoing example. For details, refer to the foregoing related descriptions. For brevity, details are not described herein again.

S420: The first electronic device adjusts a display pixel density of a first application from a first display pixel density to a second display pixel density based on the display pixel density of the second electronic device.

Herein, the first display pixel density is determined based on a display pixel density of the first electronic device.

In this embodiment of this application, the display pixel density of the first electronic device is measured in DPI, and the first display pixel density is measured in DPI. In this embodiment of this application, a description of "the DPI of the first electronic device" may be used to represent "the display pixel density of the first electronic device", and a description of "first DPI" may be used to represent "the first display pixel density". Generally, the first display pixel density may be equal to the display pixel density of the first electronic device, or may be an integer multiple of 10 closest to the display pixel density of the first electronic device, or may be a preset value. The display pixel density of the first electronic device is associated with the device, and is usually a fixed value or a preset value.

In this embodiment of this application, the second display pixel density is determined based on the display pixel density of the second electronic device. The second display pixel density is measured in DPI. In this embodiment of this application, a description of "second DPI" is used to represent "the second display pixel density".

In other words, the display pixel density of the first application is initially or is preset to the first display pixel density determined based on the display pixel density of the first electronic device. When the first application needs to be projected and displayed on the second electronic device, the first electronic device adjusts the display pixel density of the first application to the second display pixel density determined based on the display pixel density of the second electronic device. In this way, during projection display, a display interface of the first application may automatically adapt to the screen of the second electronic device, to optimize an effect of projection display of the first application on the second electronic device.

In this embodiment of this application, the first electronic device may determine the second display pixel density based on the display pixel density of the second electronic device in a plurality of manners.

In an example, the first electronic device uses the display pixel density of the second electronic device as the second display pixel density. In other words, the second display pixel density is equal to the display pixel density of the second electronic device.

In this way, when the first application is projected and displayed on the second electronic device, the display interface of the first application may automatically adapt to the screen of the second electronic device, to optimize a display effect.

In another example, the first electronic device determines the second display pixel density based on the display pixel density of the second electronic device and an optimization coefficient.

For example, the second display pixel density is equal to a product of the display pixel density of the second electronic device and the optimization coefficient.

For another example, the second display pixel density is equal to a product of the optimization coefficient and a value that is an integer multiple of 10 and that is closest to the display pixel density of the second electronic device. For example, if the display pixel density of the second electronic device is 164 dpi, a value that is an integer multiple of 10 and that is closest to 164 is 160. Therefore, the second display pixel density may be equal to a product of 160 and the optimization coefficient.

Based on the optimization coefficient, the display pixel density of the second electronic device may be dynamically corrected and adjusted based on a user requirement (for example, requirements of a user in different projection scenarios, requirements of the user for different devices, and requirements of different users), to obtain a second display pixel density that better adapts to the screen of the second electronic device. In this way, sizes of a text, an image, a control, and the like in an application interface projected and displayed based on the second display pixel density can be more convenient for the user to operate, view, and the like.

In still another example, the first electronic device determines the second display pixel density based on the display pixel density of the second electronic device, the display pixel density of the first electronic device, and the optimization coefficient.

For example, the display pixel density of the first electronic device may include an actual display pixel density and a default display pixel density. The default display pixel density may be understood as a display pixel density with an optimal display effect for a screen specification of the first electronic device. For example, if a screen of the first electronic device is 5 inches to 6 inches, for example, 5.5 inches, the default display pixel density of the first electronic device is usually 480 dpi. Different screen sizes of the electronic device correspond to different default display pixel densities. The default display pixel density may be one of a plurality of preset display pixel densities specified when the electronic device is delivered from a factory, or may be a preset value written by a software developer through code after the electronic device is delivered from a factory. This is not limited in embodiments of this application. For example, the first electronic device is a mobile phone. Before the mobile phone is delivered from a factory, a system provides a plurality of display pixel densities, so that the user can select one as the actual display pixel density based on a requirement. In the plurality of display pixel densities, the system further specifies one of the plurality of display pixel densities as the default display pixel density. For example, a value of the default display pixel density may be 0.75 times, 1.5 times, or an integer multiple of a reference density (for example, 160 dpi).

Correspondingly, the second display pixel density may be equal to a product of the display pixel density of the second electronic device, the optimization coefficient, and a ratio of the actual display pixel density of the first electronic device to the default display pixel density of the first electronic device.

For ease of understanding, the second display pixel density may be expressed as the following formula (1):

$$ R \ = \ \frac{R1}{Rd1} * R2 * m \qquad\qquad (1) $$

R represents the second display pixel density, R1 represents the actual display pixel density of the first electronic device, Rd1 represents the default display pixel density of the first electronic device, R2 represents the display pixel density of the second electronic device, and m represents the optimization coefficient.

For example, if the actual display pixel density R1 of the first electronic device is 486 dpi, the default display pixel density Rd1 of the first electronic device is 480 dpi. Correspondingly, the second display pixel density R= (R1=486/Rd1=480)*the display pixel density R2 of the second electronic device*the optimization coefficient m.

In some embodiments, the foregoing formula (1) may be obtained by simplifying the following formula (2):

$$ R \ = \ \frac{R1}{Rd1} * \left( \frac{R2}{Rs} * m \right) * Rs \qquad\qquad (2) $$

R represents the second display pixel density, R1 represents the actual display pixel density of the first electronic device, Rd1 represents the default display pixel density (for example, 480 dpi) of the first electronic device, R2 represents an actual display pixel density of the second electronic device, Rs represents a default display pixel density (for example, 160 dpi) of the second electronic device, and m represents the optimization coefficient. Actually, in the formula (2), a ratio of R2 to Rs, namely, R2/Rs, is a quantity relationship between a device independent pixel and px for the second electronic device.

For another example, the second display pixel density is equal to a product of a value that is an integer multiple of 10 and that is closest to the display pixel density of the second electronic device, the optimization coefficient, and the ratio of the actual display pixel density of the first electronic device to the default display pixel density of the first electronic device.

For ease of understanding, the second display pixel density may be expressed as the following formula (3):

$$ R \ = \ \frac{R1}{Rd1} * R' * m \qquad\qquad (3) $$

R represents the second display pixel density, R1 represents the actual display pixel density of the first electronic device, Rd1 represents the default display pixel density of the first electronic device, R' represents the value that is an integer multiple of 10 and that is closest to the display pixel density of the second electronic device, and m represents the optimization coefficient.

For example, if the actual display pixel density R1 of the first electronic device is 486 dpi, the default display pixel density Rd1 of the first electronic device is 480 dpi. When the display pixel density R2 of the second electronic device is 242 dpi, a value that is an integer multiple of 10 and that is closest to the display pixel density of the second electronic device is 240, that is, R' is 240. Correspondingly, the second display pixel density R=(R1=486/Rd1=480)*(R'=240)*the optimization coefficient m.

The display pixel density of the second electronic device in this embodiment of this application is a display pixel density of the second electronic device for actual display, namely, the actual display pixel density of the second electronic device.

In this embodiment of this application, the optimization coefficient may be used to correct and adjust the display pixel density of the second electronic device. In addition, an interface of the first application is first drawn on the first electronic device and then projected onto the second electronic device, and all applications projected onto the second electronic device run on the first electronic device. Therefore, the display pixel density of the first electronic device affects a display effect of the first application on the second electronic device. For example, most electronic devices are preset to support adjustment of several fixed display pixel densities (for example, 0.75 times or 1.5 times). If the user performs adjustment on the first electronic device, calculation on the second electronic device is also affected. In this example, the display pixel density of the first electronic device is considered when the second display pixel density is determined, so that an error caused by the display pixel density of the first electronic device can be reduced or eliminated, to obtain a second display pixel density that better adapts to the screen of the second electronic device.

In this embodiment of this application, the first electronic device may directly or indirectly obtain the display pixel density of the first electronic device.

In an example, the display pixel density of the first electronic device may be prestored as a fixed parameter. To be specific, the display pixel density of the first electronic device is stored in a memory of the first electronic device before the first electronic device is delivered from a factory. In this way, the first electronic device may directly read the parameter from the memory. For example, the display pixel density of the first electronic device may be 320 dpi, 480 dpi, 640 dpi, or the like.

In another example, the display pixel density of the first electronic device may be determined based on a display specification of the first electronic device. For example, the display specification of the first electronic device may include a screen size and screen resolution. Herein, the screen size may be represented as a length*a width or a length of a diagonal of a screen, and the screen resolution is represented as a quantity of pixels in a horizontal direction and a vertical direction, for example, a pixel width*a pixel height. The first electronic device may calculate a value of the pixel width/the screen length, a value of the pixel height/the screen width, or a value of $\sqrt{\text{pixel width}^2 + \text{pixel height}^2}$ /the length of the diagonal of the screen, and use the value as the display pixel density of the first electronic device. It may be understood that units of the length and the width listed in the foregoing examples are merely examples. In another example, another length unit, for example, a millimeter or an inch, may alternatively be used. Similarly, a unit of the length of the diagonal is merely an example. In another example, another length unit, for example, a millimeter or a centimeter, may alternatively be used. During specific calculation, conversion may be performed based on an actual unit type of the parameter.

In some embodiments, the optimization coefficient mentioned above may be determined based on at least one of a type of the first application, a user type, and a projection scenario.

In an example, the optimization coefficient may be determined based on the type of the first application.

For example, an optimization coefficient may be preset for each application, optimization coefficients corresponding to different applications may be the same or may be different, and the optimization coefficient used for determining the second display pixel density is an optimization coefficient corresponding to the first application.

For another example, applications may be classified into a plurality of types, each type of application includes at least one application, and each type of application corresponds to one optimization coefficient. In this case, the optimization coefficient used for determining the second display pixel density is an optimization coefficient corresponding to a type to which the first application belongs.

For example, applications are classified into two types, for example, a first-type application and a second-type application. The first-type application corresponds to a first optimization coefficient, and the second-type application corresponds to a second optimization coefficient. If the first application is the first-type application, the optimization coefficient used for determining the second display pixel density is the first optimization coefficient; or if the first application is the second-type application, the optimization coefficient used for determining the second display pixel density is the second optimization coefficient.

By way of example but not limitation, the first-type application may include at least one of a social application (for example, a phone application), a map navigation application, an audio application, a book reading application, and the like; and the second-type application may include a media entertainment application like a video application and a game application. For the first-type application, an interface element needs to be scaled up as much as possible to ensure that an interface is clearer and more intuitive; and for the second-type application, image quality needs to be preferentially ensured to make an interface clearer and more appropriate. Therefore, the first optimization coefficient may be greater than the second optimization coefficient.

For example, the first electronic device is a mobile phone, and the second electronic device is a head unit. When the first application is the first-type application, the first optimization coefficient may be used to calculate the second display pixel density. In this way, an interface element of the first application may be scaled up as much as possible during projection, to ensure that the user uses the first application more intuitively and clearly in a driving process. When the first application is the second-type application, the second optimization coefficient may be used to calculate the second display pixel density. In this way, during projection, not only image quality of the first application can be ensured, but also more appropriate definition can be obtained through adjustment. This is applicable to use of the first application through projection after the user parks the vehicle.

In this embodiment of this application, different applications may correspond to different optimization coefficients, to obtain different display pixel densities used to draw an application interface. In this way, when different applications are projected and displayed on the second electronic device, different display effects may be achieved. For example, different optimization effects are achieved in terms of a display element and a layout, so that sizes of texts, images, adaptation, controls (like buttons), and layouts on different application interfaces are more convenient for the user to read, view, operate, and the like.

In another example, the optimization coefficient may be determined based on the user type.

For example, users may be classified into a plurality of types, and each type of user corresponds to one optimization coefficient. In this case, the optimization coefficient used for determining the second display pixel density is an optimization coefficient corresponding to a type to which a user using a projection function belongs.

For example, users are classified into two types, for example, a first-type user and a second-type user. The first-type user corresponds to a first optimization coefficient, and the second-type user corresponds to a second optimization coefficient. If a user using a projection function of the first electronic device is the first-type user, an optimization coefficient used for calculating the second display pixel density is the first optimization coefficient. If a user using a projection function of the first electronic device is the second-type user, an optimization coefficient used for calculating the second display pixel density is the second optimization coefficient.

By way of example but not limitation, the first-type user may include an elderly user and/or a user wearing glasses, and the second-type user may include a user other than the first-type user. The first optimization coefficient is greater than the second optimization coefficient. The elderly user herein may be a user whose age exceeds a preset age (for example, 55 years old or 60 years old). In this embodiment of this application, the interface element displayed based on the first optimization coefficient may be scaled up as much as possible, so that the user can view the interface element more clearly. An interface projected and displayed based on the second optimization coefficient can better adapt to the screen of the second electronic device while the user clearly views the interface.

In some embodiments, the user type may be identified by using a camera in the first electronic device or the second electronic device. Alternatively, the user may enter the user type on the first electronic device or the second electronic device.

In this embodiment of this application, different users may correspond to different optimization coefficients, to obtain different display pixel densities used to draw the application interface. In this way, when different users use the projection function, different display effects may be achieved. For example, different optimization effects are achieved in terms of a display element and a layout, so that sizes of a text, an image, adaptation, a control (like a button), and a layout on an application interface are more convenient for a corresponding type of user to read, view, operate, and the like.

In still another example, the optimization coefficient may be determined based on the projection scenario.

For example, an optimization coefficient may be preset for each projection scenario (for example, a computer projection scenario, a television projection scenario, or a head unit projection scenario), and optimization coefficients corresponding to different projection scenarios may be the same or may be different. The optimization coefficient used for determining the second display pixel density is an optimization coefficient corresponding to a current projection scenario.

For another example, the projection scenario may be classified into a plurality of types. Each type of scenario includes at least one projection scenario, and each type of scenario corresponds to one optimization coefficient. The optimization coefficient used for determining the second display pixel density is an optimization coefficient corresponding to a type to which the current projection scenario belongs.

For example, the projection scenario is classified into two types, for example, a first-type scenario and a second-type scenario. The first-type scenario corresponds to a first optimization coefficient, and the second-type scenario corresponds to a second optimization coefficient. If the current projection scenario is the first-type scenario, the optimization coefficient used for determining the second display pixel density is the first optimization coefficient. If the current projection scenario is the second-type scenario, the optimization coefficient used for determining the second display pixel density is the second optimization coefficient.

By way of example but not limitation, the first-type scenario may include the head unit projection scenario, the second-type scenario may include the computer projection scenario and the television projection scenario, and the first optimization coefficient is greater than the second optimization coefficient. In this way, in the head unit projection scenario, that is, in a driving scenario, the projection function is used, so that an interface element of the first application can be scaled up as much as possible, to ensure that the user uses the first application more intuitively and clearly in the driving process. In the computer projection scenario or the television projection scenario, image quality of the first application can be ensured, and more appropriate definition can be obtained through adjustment.

In this embodiment of this application, different projection scenarios may correspond to different optimization coefficients, to obtain different display pixel densities used to draw the application interface. In this way, when the projection function is used in different scenarios, different display effects may be achieved. For example, different optimization effects are achieved in terms of a display element and a layout, so that sizes of a text, an image, adaptation, a control (like a button), and a layout on an application interface are more convenient for the user to read, view, operate, and the like in different scenarios.

In still another example, the optimization coefficient may be determined based on at least two of the type of the first application, the user type, and the projection scenario.

For example, each application type corresponds to one optimization coefficient, each user type corresponds to one optimization coefficient, each projection scenario corresponds to one optimization coefficient, and weights are separately configured for the application type, the user type, and the projection scenario. The optimization coefficient used for determining the second display pixel density is a sum of products of all the optimization coefficients and the corresponding weights.

For example, the optimization coefficient is determined based on the type of the first application, the user type, and the projection scenario. An optimization coefficient corresponding to the first application is A1, an optimization coefficient corresponding to a user type that currently uses the projection function is A2, an optimization coefficient corresponding to the current projection scenario is A3, a weight of the application type is q1, a weight of the user type is q2, and a weight of the projection scenario is q3. The optimization coefficient used for determining the second display pixel density=A1*q1+A2*q2+A3*q3.

In some embodiments, a plurality of values may be preset for the optimization coefficient, and a value of the optimization coefficient used for determining the second display pixel density may be selected based on a size of a to-be-displayed element. For example, the optimization coefficient may include a first value, a second value, and a third value. The first value corresponds to a first level, and a second display pixel density obtained through calculation based on the first value may maximize an interface element of an application. The second value corresponds to a second level, and a second display pixel density obtained through calculation based on the second value may enable the interface element of the application to be of a medium size. The third value corresponds to a third level, and a second display pixel density obtained through calculation based on the third value may minimize the interface element of the application.

For example, the first electronic device may select, based on at least one of the application type, the user type, and the projection scenario, one value from the plurality of preset values of the optimization coefficient, to calculate the second display pixel density.

For another example, the first electronic device may provide an interactive interface for the user, and the user may select, based on a requirement of the user, one value from the plurality of preset values of the optimization coefficient, to calculate the second display pixel density.

In some embodiments, when the interface element in the first application needs to be scaled up on the second electronic device, the optimization coefficient is greater than 1. When the interface element in the first application needs to be scaled down on the second electronic device, the optimization coefficient is less than 1.

S430: The first electronic device projects the first application for display on the second electronic device based on the second display pixel density.

By way of example but not limitation, in this step, the first electronic device may obtain a value of a device independent pixel of the interface element, convert the value into a pixel quantity based on the second display pixel density, draw a corresponding interface element based on the pixel quantity, and finally transfer a drawn interface to the second electronic device for display.

For example, the first electronic device obtains a dp value of the interface element. 1 dp=(the second display pixel density/the reference density) px. In this case, the pixel quantity of the interface element=the dp value*(the second display pixel density/the reference density). For example, the reference density is 160 dpi.

In the projection display method provided in this embodiment of this application, when the first application is projected onto the second electronic device for display, the display pixel density of the first application is adjusted from the first display pixel density determined based on the display pixel density of the first electronic device to the second display pixel density determined based on the display pixel density of the second electronic device. Therefore, when the interface of the first application is displayed on the second electronic device, the interface can adapt to the screen of the second electronic device, and a display effect is better. This improves user experience.

More specifically, the display pixel density of the first application is initially the first display pixel density. In the method provided in this embodiment of this application, the display pixel density of the first application is adjusted to the second display pixel density. In this way, a conversion relationship between the device independent pixel and a pixel px changes, in other words, a value of Y in 1 dp=Y px changes. However, the device independent pixel value like the dp value of the interface element of the first application does not change. Therefore, the pixel quantity obtained through calculation based on the second display pixel density changes, and correspondingly, a size of the interface element of the first application changes.

For example, a pixel quantity obtained based on the first display pixel density=the dp value*(the first display pixel density/160), and a pixel quantity obtained based on the second display pixel density=the dp value*(the second display pixel density/160). If the second display pixel density is greater than the first display pixel density, the pixel quantity obtained based on the second display pixel density is greater than the pixel quantity obtained based on the first display pixel density. For a same interface element, when the interface element is displayed on the second electronic device, a size displayed based on the second display pixel density is greater than a size displayed based on the first display pixel density.

Similarly, if the second display pixel density is less than the first display pixel density, the pixel quantity obtained based on the second display pixel density is less than the pixel quantity obtained based on the first display pixel density. For a same interface element, when the interface element is displayed on the second electronic device, a size displayed based on the second display pixel density is less than a size displayed based on the first display pixel density.

Therefore, in this embodiment of this application, because a DPI size of the first application displayed on the second electronic device may be adjusted, the size of the interface element may be adjusted to adapt to the screen of the second electronic device, thereby optimizing a display effect. For example, in the first application on which projection is performed based on the second display pixel density, sizes such as a text, an image, adaptation, a control (like a button), and a layout of the application interface are more convenient for the user to read, view, operate, and the like in the driving scenario, a TV scenario, and the like.

In addition, in this embodiment of this application, the display pixel density used for display at the projection destination terminal may change based on different projection destination terminals. When the projection destination terminal is changed, the first electronic device easily obtains the display pixel density of the projection destination terminal, a method for determining the display pixel density used for projection display is simple and efficient, and there is no need to modify written code.

In some embodiments, the first display pixel density is used for displaying the first application on the first electronic device, and the second display pixel density is used for displaying the first application on the second electronic device. In other words, when the first application is displayed on the first electronic device, the application interface may be drawn based on the first display pixel density. When the first application is displayed on the second electronic device, the application interface may be drawn based on the second display pixel density. In this way, regardless of an electronic device on which the first application is displayed to the user, a corresponding screen can be adapted, to present an excellent display effect.

In some embodiments, the first electronic device includes a projection management module, and the projection management module is accessible to any application on the first electronic device. Step S420 may specifically include: The first electronic device determines the second display pixel density based on the display pixel density of the second electronic device; and the first electronic device stores the second display pixel density in the projection management module.

In other words, the display pixel density used for projection display may be stored in the projection management module. In this way, when the first application needs to be projected and displayed on the second electronic device, the first application may read the display pixel density from the projection management module at any time.

In some embodiments, the projection management module stores a first list, the first list includes an application identifier and a display pixel density used for projection onto the second electronic device that correspond to each of at least one application, and the at least one application includes the first application.

In other words, the projection management module may store a display pixel density used for projection and an application identifier that correspond to each application that can be projected onto the second electronic device. Herein, the display pixel density that corresponds to each application and that is used for projection is determined based on the display pixel density of the second electronic device. More specifically, a manner of determining a display pixel density corresponding to an application other than the first application in the at least one application is the same as the foregoing manner of determining the second display pixel density corresponding to the first application. For details, refer to the foregoing related descriptions. For brevity, details are not described herein again.

Because the projection management module is accessible to any application on the first electronic device, when an application needs to be projected and displayed on the second electronic device, the application may conveniently read, from the projection management module based on an application identifier, a display pixel density that corresponds to the application and that is used for projection onto the second electronic device.

In some other embodiments, the projection management module may store the first list and the display pixel density of the second electronic device. The first list includes an optimization coefficient and an application identifier that correspond to each of the at least one application. Optionally, the projection management module may further store the display pixel density of the first electronic device.

In this way, when an application needs to be projected and displayed on the second electronic device, the application may conveniently read, from the projection management module based on an application identifier, the display pixel density of the second electronic device and an optimization coefficient corresponding to the application. Therefore, a display pixel density used to project the application onto the second electronic device is further determined based on the display pixel density of the second electronic device and the optimization coefficient. Alternatively, the application may further read the display pixel density of the first electronic device from the projection management module, to further determine, based on the display pixel density of the first electronic device, the display pixel density of the second electronic device, and the optimization coefficient, the display pixel density used to project the application onto the second electronic device.

In other words, the projection management module may directly store the display pixel density that corresponds to the application and that is used for projection display, or store a parameter used to calculate the display pixel density that corresponds to the application and that is used for projection display. This is not limited in embodiments of this application.

In some embodiments, the projection management module is configured to obtain the display pixel density of the second electronic device. In other words, step S410 may specifically include: The first electronic device obtains the display pixel density of the second electronic device via the projection management module.

In some embodiments, the projection management module is configured to determine the second display pixel density. In other words, in step S420, that the first electronic device determines the second display pixel density based on the display pixel density of the second electronic device may specifically include: The first electronic device determines the second display pixel density via the projection management module.

By way of example but not limitation, the projection management module may be configured to perform step S410 and/or step S420 in the method 400.

In some embodiments, the first electronic device further includes a projection application. The projection application is used to implement projection between the first electronic device and the second electronic device. The projection application may be further used to obtain the display pixel density of the second electronic device. In other words, step S410 may specifically include: The first electronic device obtains the display pixel density of the second electronic device via the projection application.

In some embodiments, the projection application may be further used to determine the second display pixel density. In other words, in step S420, that the first electronic device determines the second display pixel density based on the display pixel density of the second electronic device may specifically include: The first electronic device determines the second display pixel density via the projection application.

By way of example but not limitation, the projection application may be used to perform step S410 and/or step S420 in the method 400.

In this embodiment of this application, when the first electronic device includes the projection management module and the projection application, the projection module is accessible to the projection application. When the projection application is used to determine the second display pixel density, the projection application may store the determined second display pixel density in the projection management module.

In some embodiments, the first application may include a first resource module, and the first resource module runs in a process of the first application. Before step S430, the method 400 may further include: The first electronic device obtains the second display pixel density from the projection management module via the first resource module.

In this embodiment of this application, a corresponding resource module runs in a process of each application, and the resource module in the process of each application is configured to manage a display resource of the corresponding application, for example, control a size, a color, a layout, and the like of an interface element. Processes of different applications are isolated from each other. Therefore, resource modules in different application processes cannot directly communicate with each other, but resource modules in different application processes can access the projection management module. Therefore, when different applications are projected onto the second electronic device, resource modules in application processes may obtain, from the projection management module, respective corresponding display pixel densities used for projection display, to draw application interfaces.

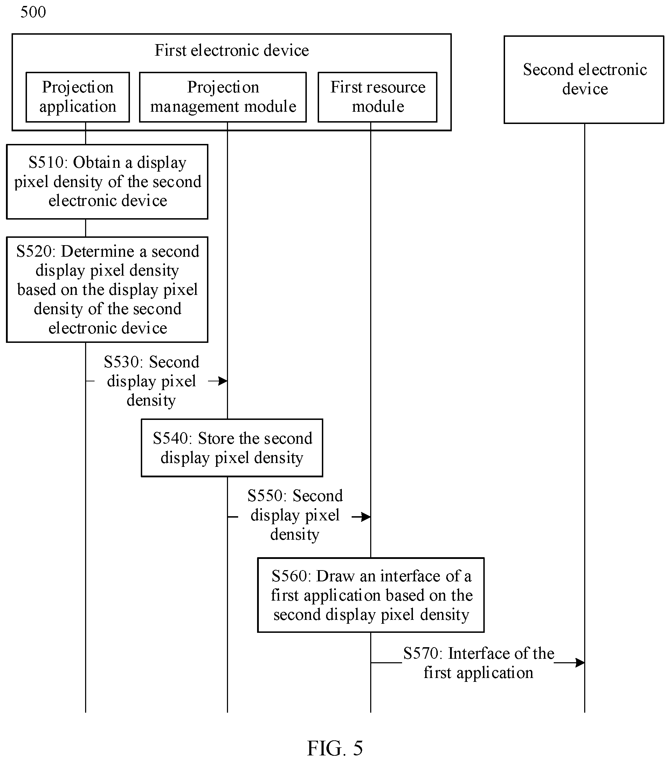

FIG. 5 is a schematic flowchart of a projection display method according to an embodiment of this application. The method 500 shown in FIG. 5 is a specific example of the method 400. In the method 500, a first electronic device includes a projection application, a projection management module, and a first resource module. The projection application is used to implement projection between the first electronic device and a second electronic device. The projection management module is accessible to any application on the first electronic device. The first electronic device further includes a first application, and the first resource management module runs in a process of the first application. The method 500 is mainly performed by the first electronic device in a projection system. As shown in FIG. 5, the method 500 includes step S510 to step S570. The following provides detailed descriptions with reference to the accompanying drawing.

S510: The projection application obtains a display pixel density of the second electronic device.

In this embodiment of this application, the projection application is used to implement projection between the first electronic device and the second electronic device. Therefore, the projection application may obtain the display pixel density of the second electronic device from the second electronic device through communication with the second electronic device.

For descriptions of the display pixel density of the second electronic device and a manner in which the projection application obtains the display pixel density of the second electronic device, refer to related descriptions of step S410 in the method 400. For brevity, details are not described herein again.

S520: The projection application determines a second display pixel density based on the display pixel density of the second electronic device.

In this step, for a manner in which the projection application determines the second display pixel density, refer to related descriptions of step S420 in the method 400. For brevity, details are not described again.

S530: The projection application transmits the second display pixel density to the projection management module.

S540: The projection management module stores the second display pixel density.

S550: When the first application needs to be projected and displayed on the second electronic device, the first resource module obtains the second display pixel density from the projection management module.

S560: The first resource module draws an interface of the first application based on the second display pixel density.

For example, the first resource module may obtain a value of a device independent pixel of an interface element, convert the value into a pixel quantity based on the second display pixel density, and then draw a corresponding interface element based on the pixel quantity.

S570: The first resource module transfers a drawn interface of the first application to the second electronic device, to implement projection display.

Generally, application display is controlled by a resource module running in an application, and an upper-layer application is not allowed to modify a display pixel density of another application. In other words, an application cannot directly modify a display pixel density of another application. In the method 500, the projection application may modify a display pixel density of the first application, and transfer a modified display pixel density to an application process of the first application via the projection management module, to implement drawing and projection of an application interface.

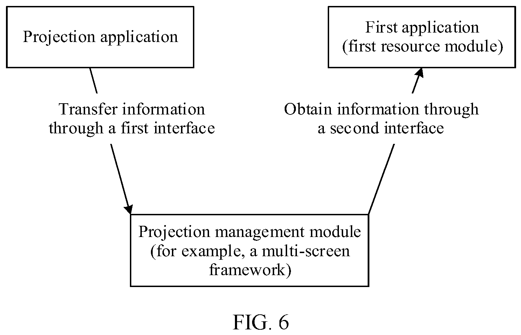

For example, FIG. 6 is a block diagram of a structure of an electronic device to which the projection display method is applied according to an embodiment of this application. As shown in FIG. 6, the first electronic device includes the projection application, the projection management module, and the first application. Both the projection application and the first application can access the projection management module. In specific implementation, the projection application may transfer information to the projection management module through a first interface, and the first application (which may be specifically the first resource module running in the process of the first application) obtains information about settings of the projection application from the projection management module through a second interface. In this way, the display pixel density that is of the first application and that is set by the projection application can be obtained by the first resource module through bridging of the projection management module, so that the display pixel density of the first application can be modified by the projection application. In this way, a dynamically calculated display pixel density used for projection display can be transferred to an application that needs to optimize display.

By way of example but not limitation, the projection application may be a HiCar application, the projection management module may be a multi-screen framework, and the multi-screen framework may provide the first interface for the HiCar application, to store, in a memory, a display pixel density that needs to be set for the first application. Finally, the resource management module obtains the display pixel density through the second interface. When the HiCar application is disconnected from the multi-screen framework, the multi-screen framework can destroy data stored in the HiCar application.

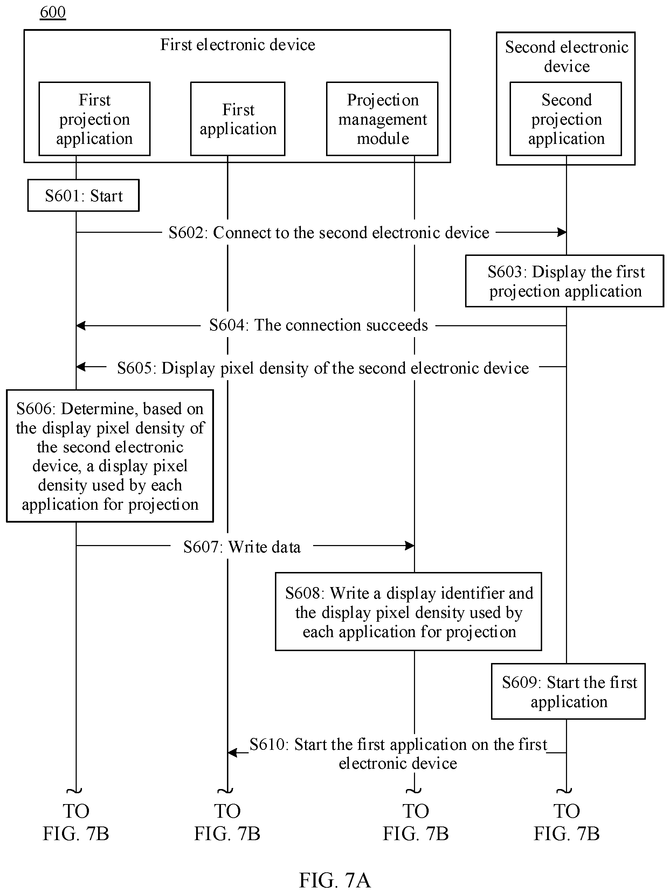

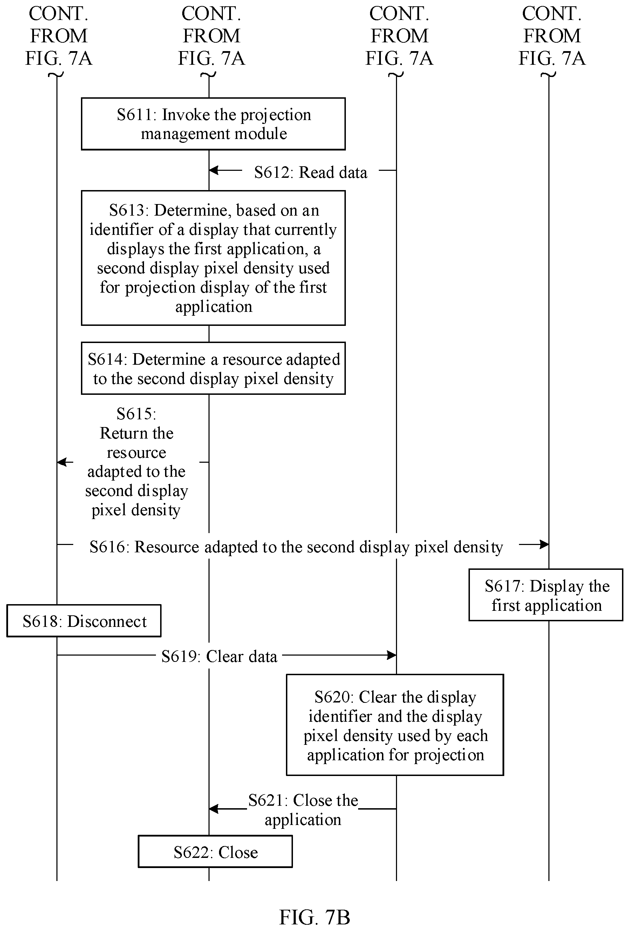

FIG. 7A and FIG. 7B are a schematic flowchart of a projection display method according to an embodiment of this application. The method 600 shown in FIG. 7A and FIG. 7B is a more specific example of the method 500. In the method 600, a first electronic device includes a first projection application, a first application, and a projection management module, and a second electronic device includes a second projection application. Herein, the first projection application and the second projection application are used to implement projection display of an application on the first electronic device on the second electronic device. For example, the first projection application is different from the second projection application, and the second projection application is used to carry a projection interface. For example, the first projection application may be a HiCar application, and the second projection application may be a human machine interface (human machine interface, HMI) application. As shown in FIG. 7A and FIG. 7B, the method 600 may include step S601 to step S617. The following provides detailed descriptions with reference to the accompanying drawing.

S601: A user starts the first projection application on the first electronic device.

S602: The first electronic device is connected to the second electronic device via the first projection application and the second projection application.

**In** this step, the first electronic device is connected to the second electronic device for projection.

S603: The second electronic device displays the first projection application via the second projection application.

Herein, the second projection application is used to carry the projection interface. After the first electronic device is connected to the second electronic device, the second projection application carries an interface of the first projection application.

S604: The second electronic device notifies the first electronic device that the connection succeeds.

Specifically, the second projection application in the second electronic device notifies the first projection application in the first electronic device that the projection connection succeeds.

S605: The first projection application obtains a display pixel density of the second electronic device.

S606: The first projection application determines, based on the display pixel density of the second electronic device, a display pixel density used for projection of each application.

Herein, the display pixel density used for projection of each application is a display pixel density used for projection and display of the application on the second electronic device. It may be understood that each application described herein is an application that can be projected onto the second electronic device.

S607: The first projection application writes data into the projection management module.

For example, the data written by the first projection application includes a display identifier and a display pixel density used by each application for projection. The display identifier (display identification, DisplayID) herein includes an identifier of each projection destination terminal connected to the first electronic device for projection. For example, if the second electronic device includes a first display, and an identifier of the first display is DisplayID1, the data written by the first projection application includes DisplayID1. If the second electronic device includes a first display and a second display, and identifiers of the first display and the second display are respectively DisplayID1 and DisplayID2, the data written by the first projection application includes DisplayID1 and DisplayID2. In this embodiment of this application, when the second electronic device includes a plurality of displays with different identifiers, the different displays may independently display projection interfaces. Therefore, it may also be considered that the first electronic device is connected to a plurality of projection destination terminals. Generally, when an application is projected and displayed, the application may learn of a display on which the application is displayed, that is, learn of an identifier of the display configured to project the application. The display identifier may be used to uniquely identify the projection destination terminal.

In some embodiments, the data written by the first projection application may further include an allowlist package name list. The allowlist package name list includes a package name of an application that can be projected onto the second electronic device. By way of example but not limitation, in different projection scenarios, package names of applications included in the allowlist package name list may be different. The package name of the application may be used to uniquely identify the application.

S608: The projection management module writes the display identifier and the display pixel density used by each application for projection.

S609: The user starts the first application on the second electronic device.

For example, the user may start the first application on the projection interface carried by the second projection application, that is, a projection interface of the first projection application. For example, the second electronic device may correspondingly create a plurality of activities (activities).

S610: The second electronic device notifies the first electronic device to start the first application on the first electronic device.

S611: The first application invokes the projection management module.

S612: The first application reads data from the projection management module.

For example, the data read by the first application includes the data written by the first projection application into the projection management module, for example, the display identifier and the display pixel density used by each application for projection.

S613: The first application determines, based on an identifier of a display that currently displays the first application, a second display pixel density used for projection display of the first application.

As mentioned above, the first application may learn of the identifier of the projection destination terminal onto which the first application is projected. Therefore, the first application may determine, based on the identifier of the display that currently displays the first application, a display pixel density used for projecting the first application for display on the second electronic device, that is, the second display pixel density.

For example, the first electronic device is connected to two projection destination terminals (for example, a projection destination terminal P and a projection destination terminal Q), and display pixel densities of the two projection destination terminals are different. In this case, display pixel densities of the first application during projection onto the two projection destination terminals may be obtained based on the display pixel densities of the two projection destination terminals. When the first application is projected onto one of the projection destination terminals (for example, the projection destination terminal P), the display pixel density of the first application during projection onto the projection destination terminal may be determined based on an identifier of the projection destination terminal.

It may be understood that, in step S613, when determining the second display pixel density, the first application may first determine, based on the identifier of the display that currently displays the first application, display pixel densities of all applications that can be projected onto the display; and then determine the second display pixel density corresponding to the first application based on an identifier of the first application.

S614: The first application determines a resource adapted to the second display pixel density.

The resource involved herein mainly refers to a display resource, including but not limited to a text, an image, a text box, a control, and a button. Specifically, in this step, the first application may draw an application interface based on the determined display resource.

S615: The first application returns, to the first projection application, the resource adapted to the second display pixel density.

S616: The first projection application sends, to the second projection application, the resource adapted to the second display pixel density.

S617: The second electronic device displays the first application via the second projection application.

In this step, the interface carried by the second projection application is an interface of the first application.

In the projection display method provided in this embodiment of this application, the first projection application may obtain the display pixel density of the projection destination terminal, and then calculate display pixel densities that need to be displayed by the application on different projection destination terminals. In addition, the projection management module is used to enable the application side to transfer a display pixel density that needs to be set for an application process. In this way, a resource module running in the application process can dynamically adjust an interface display effect based on the specified display pixel density and the identifier of the projection destination terminal currently used for the projection application.

In some embodiments, the method 600 may further include S618 to step S622.

S618: The user disconnects, on the first electronic device, the first projection application from the second electronic device.

S619: The first projection application indicates the projection management module to clear data.

S620: The projection management module clears the data previously written by the first projection application, for example, the display identifier and the display pixel density used by each application for projection.

It may be understood that the projection management module clears related data of a projection destination terminal disconnected from the first electronic device. For example, the first electronic device is connected to two projection destination terminals (for example, a projection destination terminal P and a projection destination terminal Q). When the projection destination terminal P is disconnected from the first electronic device, the projection management module clears an identifier of the projection destination terminal P and a display pixel density of each application used for projection display on the projection destination terminal P, and an identifier of the projection destination terminal Q and a display pixel density of each application used for projection display on the projection destination terminal Q are still retained.

S621: The projection management module indicates the first application to close.

S622: The first electronic device closes the first application.

**In** this embodiment of this application, after the first projection application is disconnected, the currently displayed first application is closed. When the first application is started on the first electronic device again, a display effect of the first application on the first electronic device is not affected.

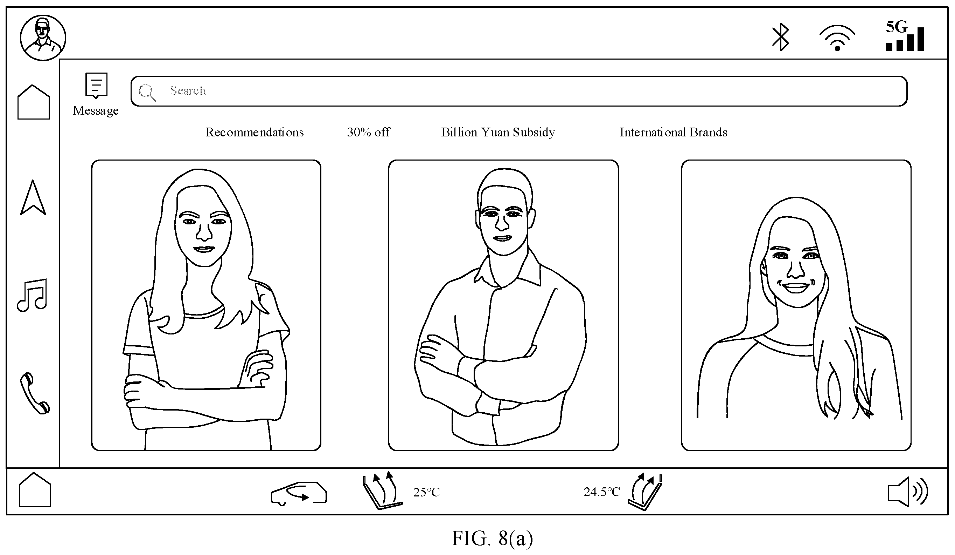

FIG. 8(a) to FIG. 8(d) are a diagram of a display effect of a projection display method according to an embodiment of this application.

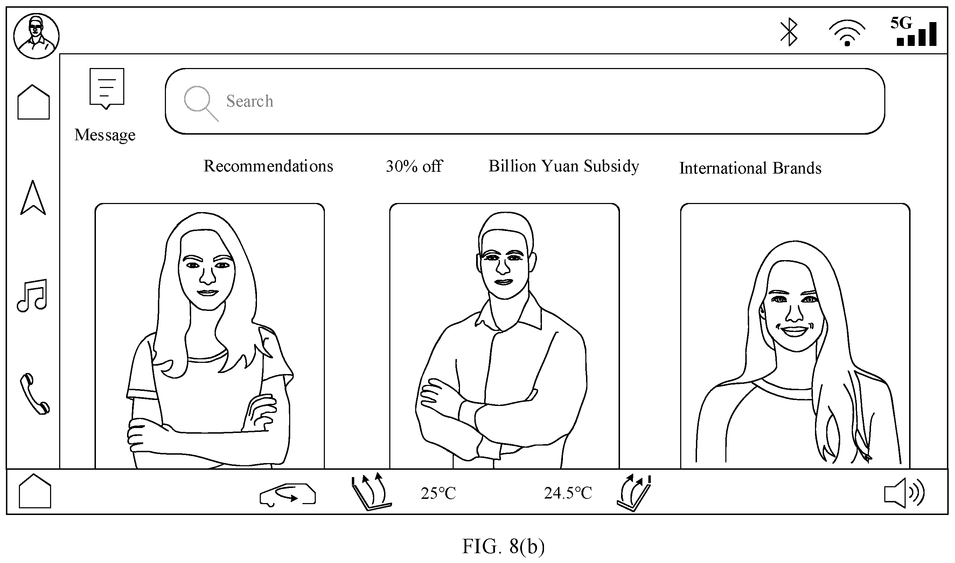

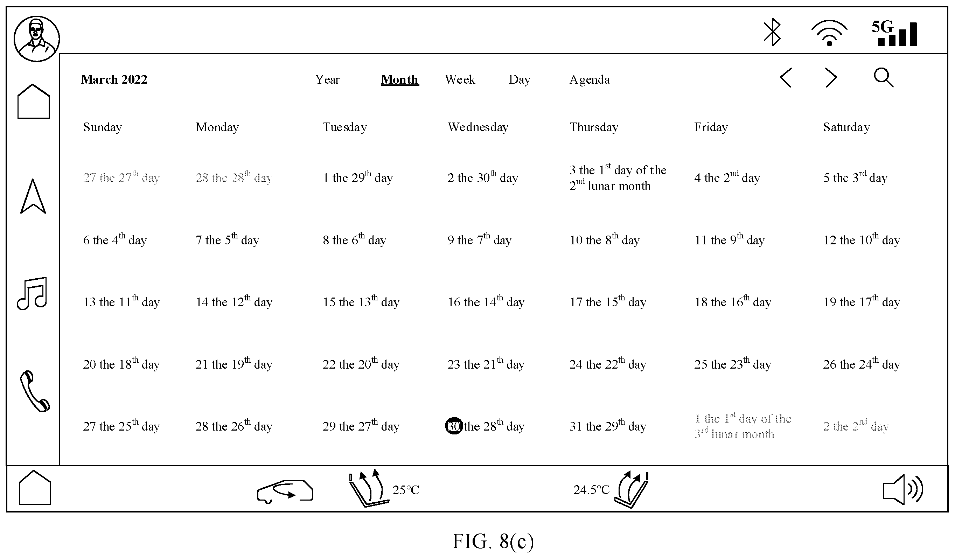

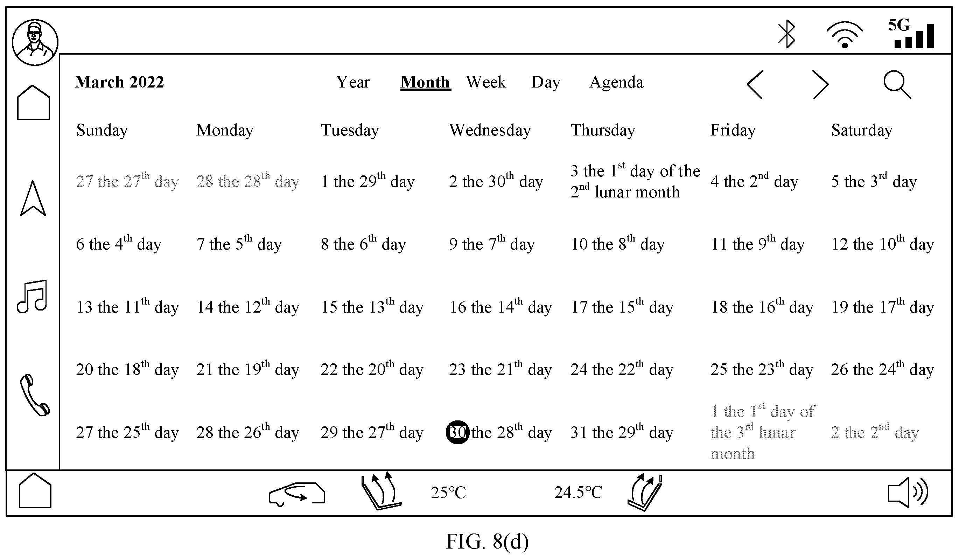

For example, a second electronic device is a head unit. FIG. 8(a) and FIG. 8(c) are diagrams of projection interfaces obtained when a first electronic device uses an existing solution, to be specific, an application interface is first drawn based on a first display pixel density and then a window is stretched, so that a first application is projected and displayed on the second electronic device. FIG. 8(b) and FIG. 8(d) are diagrams of projection interfaces obtained when the first electronic device uses the method provided in this application, to be specific, the application interface is drawn based on a second display pixel density and then projection is performed, so that the first application is projected and displayed on the second electronic device.

For example, in FIG. 8(a) and FIG. 8(b), the first application is a shopping application. As shown in FIG. 8(b), in the projection interface formed according to the method provided in this application, at least some interface elements (for example, a control and a text box) have larger sizes compared with the same interface elements shown in FIG. 8(a). The sizes are more suitable for a display of the second electronic device, and display is clearer, so that a user can view and operate more conveniently.

For example, in FIG. 8(c) and FIG. 8(d), the first application is a calendar application. As shown in FIG. 8(d), in the projection interface formed according to the method provided in this application, at least some interface elements (for example, a control and a text box) have larger sizes compared with the same interface elements shown in FIG. 8(c). The sizes are more suitable for the display of the second electronic device, and display is clearer, so that the user can view and operate more conveniently.

In some embodiments, based on the methods/steps described above, the projection display method provided in this embodiment of this application may further include: The first electronic device adjusts a display pixel density of a second application from a third display pixel density to a fourth display pixel density based on a display pixel density of the second electronic device, where the third display pixel density is determined based on a display pixel density of the first electronic device; and the first electronic device switches to display the second application on the second electronic device based on the fourth display pixel density.

In other words, the first electronic device is connected to one projection destination terminal (that is, a single display). On a same projection destination terminal, different applications may be switched for display, and display effects of different applications may be different.

Herein, a manner of determining the fourth display pixel density corresponding to the second application is similar to the foregoing manner of determining the second display pixel density corresponding to the first application. For details, refer to the foregoing related descriptions. For brevity, details are not described herein again.

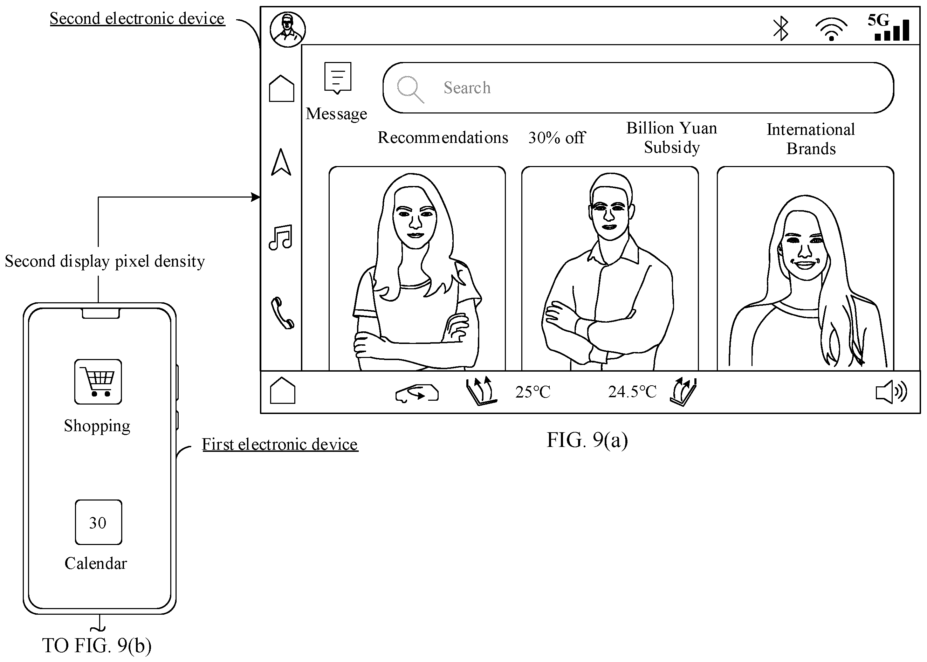

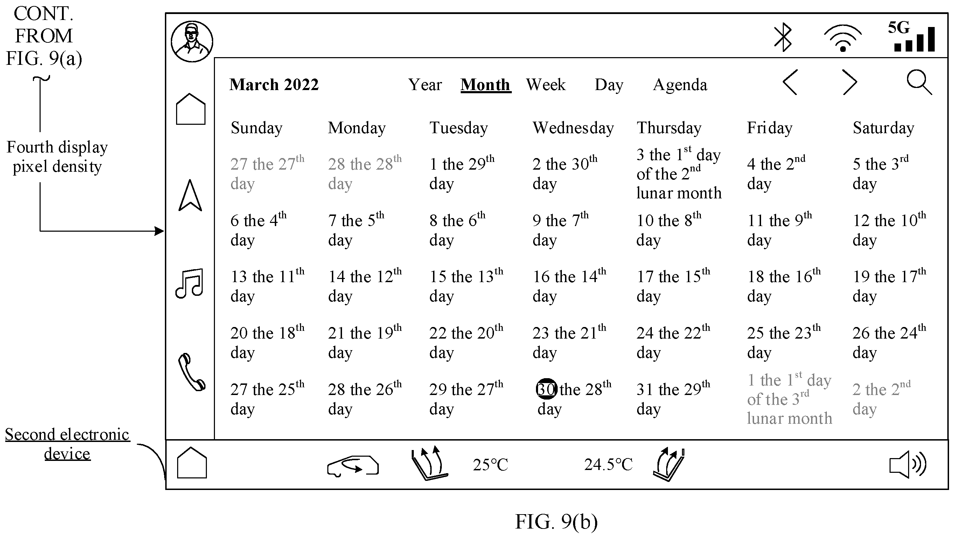

FIG. 9(a) and FIG. 9(b) are a diagram of a display effect of a projection display method according to an embodiment of this application by using an example in which the first electronic device is connected to the second electronic device for projection. When the first application is projected onto the second electronic device, as shown in FIG. 9(a), the first electronic device projects the first application for display on the second electronic device based on the second display pixel density. When the second application is projected onto the second electronic device, as shown in FIG. 9(b), the first electronic device projects the second application for display on the second electronic device based on the fourth display pixel density. For example, the first application may be a shopping application, and the second application may be a calendar application. The second display pixel density and the fourth display pixel density may be different. For example, the second display pixel density is 320 dpi, and the fourth display pixel density is 240 dpi. Certainly, it may be understood that, in some embodiments, the second display pixel density and the fourth display pixel density may alternatively be the same.

In some embodiments, if the first electronic device includes the projection management module mentioned above, the second display pixel density and the fourth display pixel density may be stored in the projection management module. The first application may include a first resource module, and the first resource module runs in a process of the first application. The second application may include a second resource module, and the second resource module runs in a process of the second application. In this case:

Before the first electronic device projects the first application for display on the second electronic device based on the second display pixel density, the method provided in this embodiment of this application may further include: The first electronic device obtains the second display pixel density from the projection management module via the first resource module.

Before the first electronic device switches to display the second application on the second electronic device based on the fourth display pixel density, the method provided in this embodiment of this application may further include: The first electronic device obtains the fourth display pixel density from the projection management module via the second resource module.

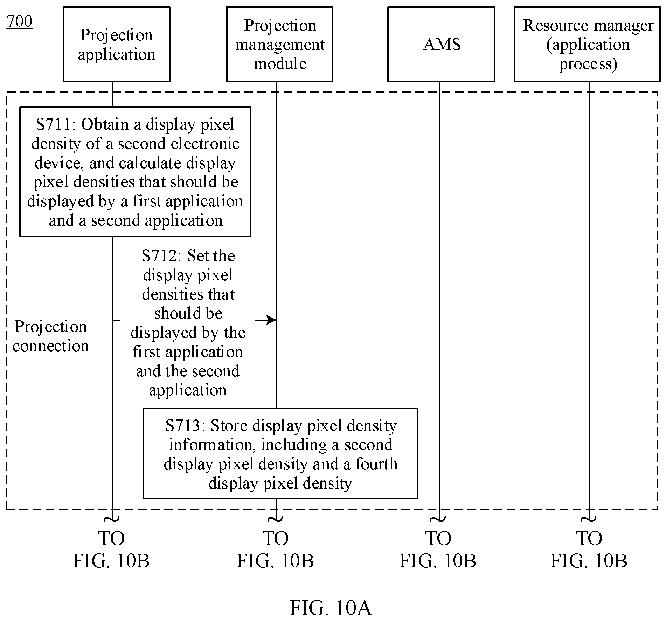

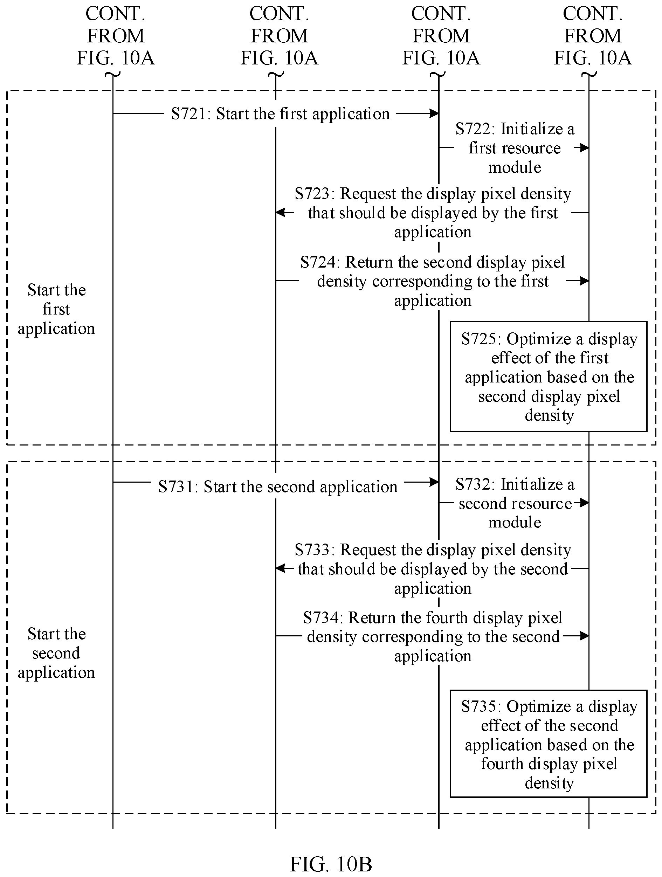

For ease of understanding, FIG. 10A and FIG. 10B are a schematic flowchart of a projection display method in the projection scenario shown in FIG. 9(a) and FIG. 9(b) by using an example in which the first electronic device includes the first application and the second application.

As shown in FIG. 10A, after the projection connection between the first electronic device and the second electronic device is completed in response to an operation of the user, the method 700 may include step S711 to step S713.

S711: A projection application on the first electronic device obtains the display pixel density of the second electronic device, and calculates display pixel densities that should be displayed by the first application and the second application.

The display pixel density that should be displayed by the first application herein includes a display pixel density of the first application used for projection onto the second electronic device, and the display pixel density that should be displayed by the second application includes a display pixel density of the second application used for projection onto the second electronic device.

It may be understood that, when the first electronic device includes more applications that can be projected onto the second electronic device, in this step, the projection application also calculates a display pixel density that should be displayed by another application. For example, the first electronic device may store, in a form of a list, display pixel densities corresponding to different applications.

S712: The projection application sets, via the projection management module, the display pixel densities that should be displayed by the first application and the second application.

For example, the projection application sends, to the projection management module in a form of a list, a display pixel density of each application during projection onto the second electronic device. The list includes the display pixel density that should be displayed by the first application and the display pixel density that should be displayed by the second application.

S713: The projection management module stores display pixel density information.

For example, the display pixel density information includes the second display pixel density corresponding to the first application and the fourth display pixel density corresponding to the second application. The second display pixel density is used for projecting the first application for display on the second electronic device, and the fourth display pixel density is used for projecting the second application for display on the second electronic device.

It may be understood that, when the first electronic device includes more applications that can be projected onto the second electronic device, the display pixel density information further includes a display pixel density that should be displayed by another application.

Still refer to FIG. 10B. When the first application is started on the second electronic device in response to an operation of the user, the method 700 may further include step S721 to step S725.

S721: The projection application notifies an AMS to start the first application.

S722: The AMS initializes the first resource module via a resource manager.

S723: The resource manager (specifically, the first resource module) requests, from the projection management module, the display pixel density that should be displayed by the first application.

S724: The projection management module returns, to the resource manager (specifically, the first resource module), the second display pixel density corresponding to the first application.

S725: The resource manager (specifically, the first resource module) optimizes a display effect of the first application based on the second display pixel density.

For example, in this step, the first resource module draws an interface of the first application based on the obtained second display pixel density.

Still refer to FIG. 10B. When the second application is started again on the second electronic device in response to an operation of the user, the method 700 may further include step S731 to step S735.

S731: The projection application notifies the AMS to start the second application.

S732: The AMS initializes the second resource module via the resource manager.

S733: The resource manager (specifically, the second resource module) requests, from the projection management module, the display pixel density that should be displayed by the second application.

S734: The projection management module returns, to the resource manager (specifically, the second resource module), the fourth display pixel density corresponding to the second application.

S735: The resource manager (specifically, the second resource module) optimizes a display effect of the second application based on the fourth display pixel density.

For example, in this step, the second resource module draws an interface of the second application based on the obtained fourth display pixel density.

According to the method shown in FIG. 10A and FIG. 10B, different applications may be started on a same projection screen, and display effects (specifically, display pixel densities that should be displayed by the applications) of the applications may be different.

In some embodiments, in the projection display method provided in this embodiment of this application, the first electronic device may be connected to a plurality of projection destination terminals. For example, the first electronic device is connected to the second electronic device for projection and is also connected to a third electronic device for projection. Based on the methods/steps described above, the projection display method provided in this embodiment of this application may further include: The first electronic device obtains a display pixel density of the third electronic device; the first electronic device adjusts a display pixel density of a third application from a fifth display pixel density to a sixth display pixel density based on the display pixel density of the third electronic device, where the fifth display pixel density is determined based on the display pixel density of the first electronic device; and the first electronic device projects the third application for display on the third electronic device based on the sixth display pixel density.

In other words, the first electronic device is connected to the plurality of projection destination terminals (that is, a plurality of displays), a plurality of applications are displayed on different projection destination terminals, and each application can automatically adjust a display effect to adapt to a screen of a projection destination terminal of the application. In addition, when a projection destination terminal is newly added and an application is projected onto the newly added projection destination terminal, a connection between an electronic device on which projection is being performed and the first electronic device does not need to be disconnected.

Herein, a manner of determining the sixth display pixel density corresponding to the third application is similar to the foregoing manner of determining the second display pixel density corresponding to the first application. For details, refer to the foregoing related descriptions. For brevity, details are not described herein again.

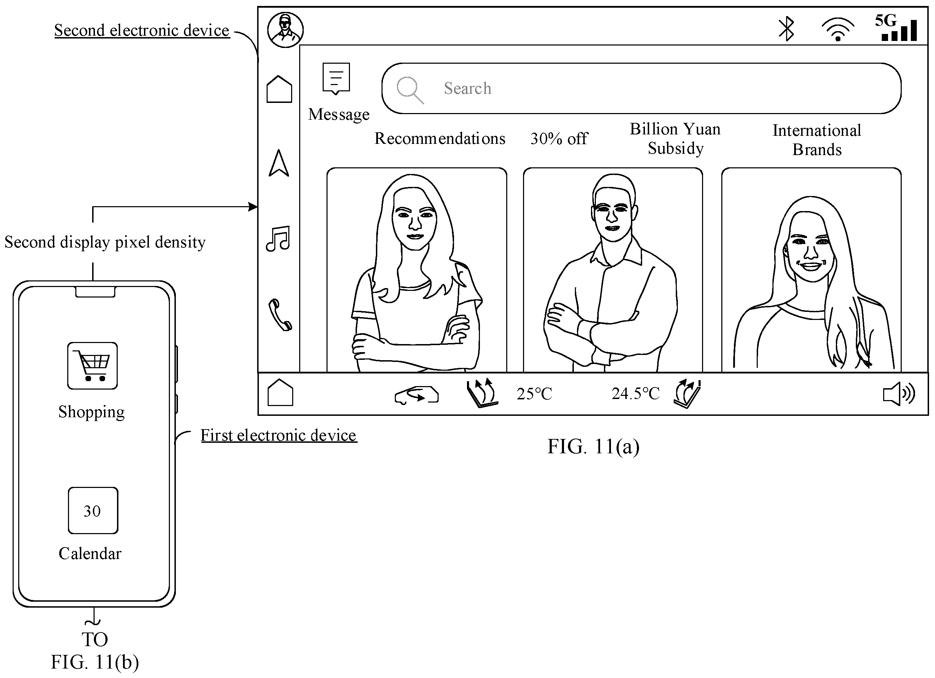

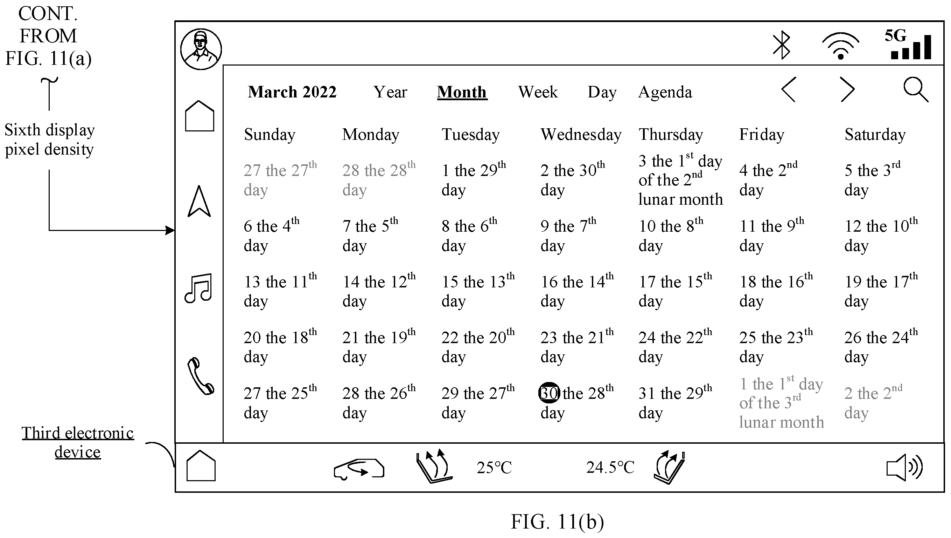

FIG. 11(a) and FIG. 11(b) are a diagram of a display effect of a projection display method according to an embodiment of this application by using an example in which the first electronic device is connected to the second electronic device for projection and is also connected to the third electronic device for projection. When the first application is projected onto the second electronic device, as shown in FIG. 11(a), the first electronic device projects the first application for display on the second electronic device based on the second display pixel density. When the third application is projected onto the third electronic device, as shown in FIG. 11(b), the first electronic device projects the third application for display on the third electronic device based on the sixth display pixel density. For example, the first application may be a shopping application, and the third application may be a calendar application. The second display pixel density and the sixth display pixel density may be different. For example, the second display pixel density is 320 dpi, and the fourth display pixel density is 240 dpi. Certainly, it may be understood that, in some embodiments, the second display pixel density and the sixth display pixel density may alternatively be the same.

In some embodiments, if the first electronic device includes the projection management module mentioned above, the second display pixel density and the sixth display pixel density may be stored in the projection management module. The first application may include a first resource module, and the first resource module runs in a process of the first application. The third application may include a third resource module, and the third resource module runs in a process of the third application. In this case:

Before the first electronic device projects the first application for display on the second electronic device based on the second display pixel density, the method provided in this embodiment of this application may further include: The first electronic device obtains the second display pixel density from the projection management module via the first resource module.

Before the first electronic device projects the third application for display on the third electronic device based on the sixth display pixel density, the method provided in this embodiment of this application may further include: The first electronic device obtains the sixth display pixel density from the projection management module via the third resource module.

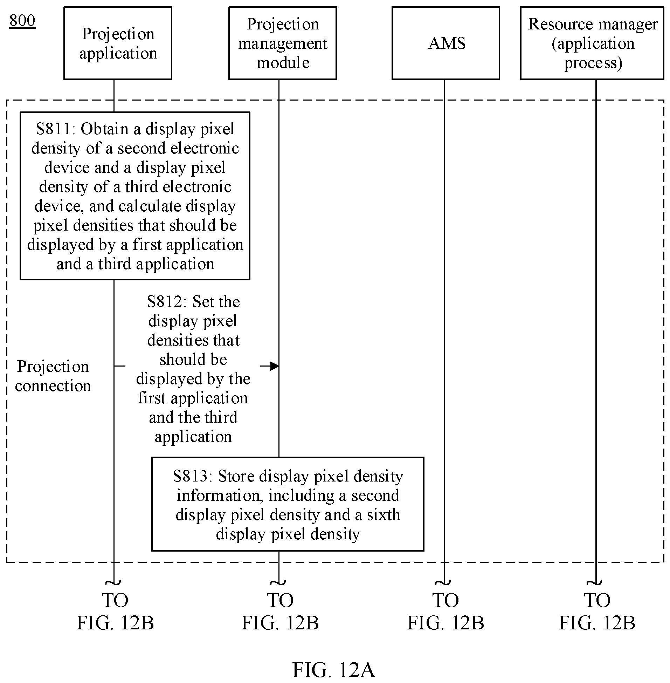

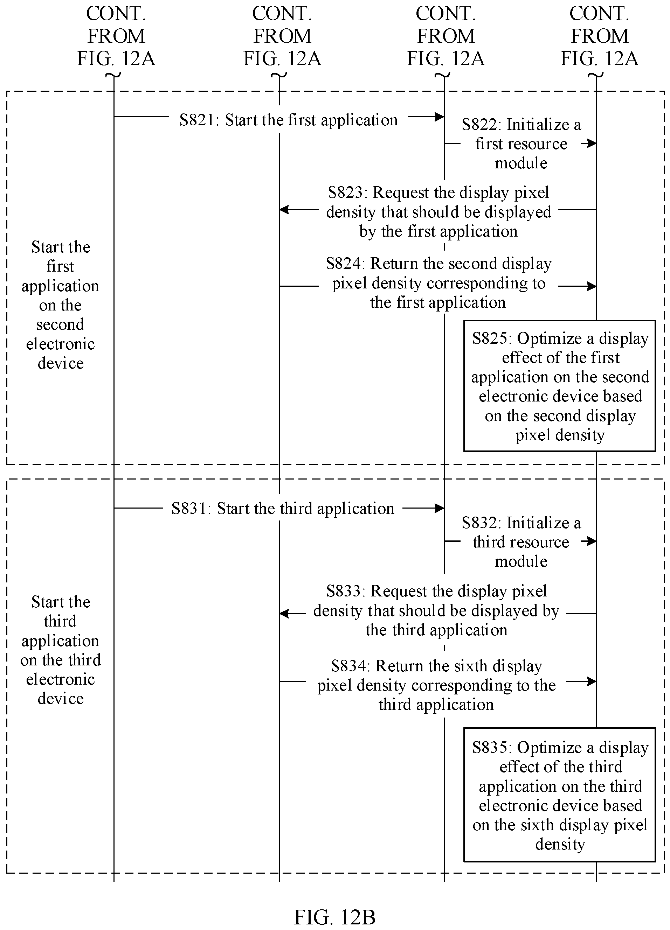

For ease of understanding, FIG. 12A and FIG. 12B are a schematic flowchart of a projection display method in the projection scenario shown in FIG. 10A and FIG. 10B by using an example in which the first electronic device includes the first application and the third application.

As shown in FIG. 12A, after the projection connection between the first electronic device and the second electronic device and the projection connection between the first electronic device and the third electronic device are completed in response to an operation of the user, the method 800 may include step S811 to step S813.

S811: The projection application on the first electronic device obtains the display pixel density of the second electronic device and the display pixel density of the third electronic device, and calculates display pixel densities that should be displayed by the first application and the third application.

The display pixel density that should be displayed by the first application herein includes a display pixel density of the first application used for projection onto the second electronic device and/or a display pixel density of the first application used for projection onto the third electronic device, and the display pixel density that should be displayed by the third application includes a display pixel density of the third application used for projection onto the second electronic device and/or a display pixel density of the third application used for projection onto the third electronic device.

It may be understood that, when the first electronic device is connected to more projection destination terminals, in this step, the projection application calculates a display pixel density used when each application is projected onto each projection destination terminal. For example, the first electronic device may store, in a form of a list, display pixel densities corresponding to different applications during projection onto different projection destination terminals.

It may be further understood that an application that can be projected onto the second electronic device may be the same as or different from an application that can be projected onto the third electronic device. Therefore, for an application, a display pixel density that should be displayed by the application includes a display pixel density used for projection onto the second electronic device and/or a display pixel density used for projection onto the third electronic device.

S812: The projection application sets, via the projection management module, the display pixel densities that should be displayed by the first application and the third application.

For example, the projection application sends, to the projection management module in a form of a list, display pixel densities of the applications during projection onto different projection destination terminals. The list includes the display pixel density that should be displayed by the first application and the display pixel density that should be displayed by the third application.

S813: The projection management module stores display pixel density information.

For example, the display pixel density information includes the second display pixel density corresponding to the first application and the sixth display pixel density corresponding to the third application. The second display pixel density is used for projecting the first application for display on the second electronic device, and the sixth display pixel density is used for projecting the third application for display on the third electronic device.

Still refer to FIG. 12B. When the first application is started on the second electronic device in response to an operation of the user, the method 800 may further include step S821 to step S825.

S821: The projection application notifies the AMS to start the first application.

S822: The AMS initializes the first resource module via the resource manager.

S823: The resource manager (specifically, the first resource module) requests, from the projection management module, the display pixel density that should be displayed by the first application.

More specifically, the first resource module requests the display pixel density that should be displayed by the first application on the second electronic device.

S824: The projection management module returns, to the resource manager (specifically, the first resource module), the second display pixel density corresponding to the first application.

S825: The resource manager (specifically, the first resource module) optimizes a display effect of the first application on the second electronic device based on the second display pixel density.

For example, in this step, the first resource module draws an interface of the first application based on the obtained second display pixel density.

Still refer to FIG. 12B. When the third application is started on the third electronic device in response to an operation of the user, the method 800 may further include step S831 to step S835.

S831: The projection application notifies the AMS to start the third application.

S832: The AMS initializes the third resource module via the resource manager.

S833: The resource manager (specifically, the third resource module) requests, from the projection management module, the display pixel density that should be displayed by the third application.

More specifically, the third resource module requests the display pixel density that should be displayed by the third application on the third electronic device.

S834: The projection management module returns, to the resource manager (specifically, the third resource module), the sixth display pixel density corresponding to the third application.

S835: The resource manager (specifically, the third resource module) optimizes a display effect of the third application on the third electronic device based on the sixth display pixel density.

For example, in this step, the third resource module draws an interface of the third application based on the obtained sixth display pixel density.

According to the method shown in FIG. 12A and FIG. 12B, different applications may be started on a plurality of projection screens, and display effects (specifically, display pixel densities that should be displayed by the applications) of the applications may be different.

In some embodiments, in the projection display method provided in this embodiment of this application, the first electronic device may be connected to a plurality of projection destination terminals. For example, the first electronic device is connected to the second electronic device for projection and is also connected to the third electronic device for projection. Based on the methods/steps described above, the projection display method provided in this embodiment of this application may further include: The first electronic device obtains the display pixel density of the third electronic device; the first electronic device determines a seventh display pixel density based on the display pixel density of the third electronic device; and when a projection interface of the first application is switched from the first electronic device to the third electronic device, the first electronic device projects the first application for display on the third electronic device based on the seventh display pixel density.

In other words, the first electronic device is connected to the plurality of projection destination terminals (that is, a plurality of displays), a same application is displayed on different projection destination terminals, and the application can automatically adjust a display effect to adapt to screens of different projection destination terminals.

Herein, a manner of determining the seventh display pixel density corresponding to the first application is similar to the foregoing manner of determining the second display pixel density corresponding to the first application. For details, refer to the foregoing related descriptions. For brevity, details are not described herein again.

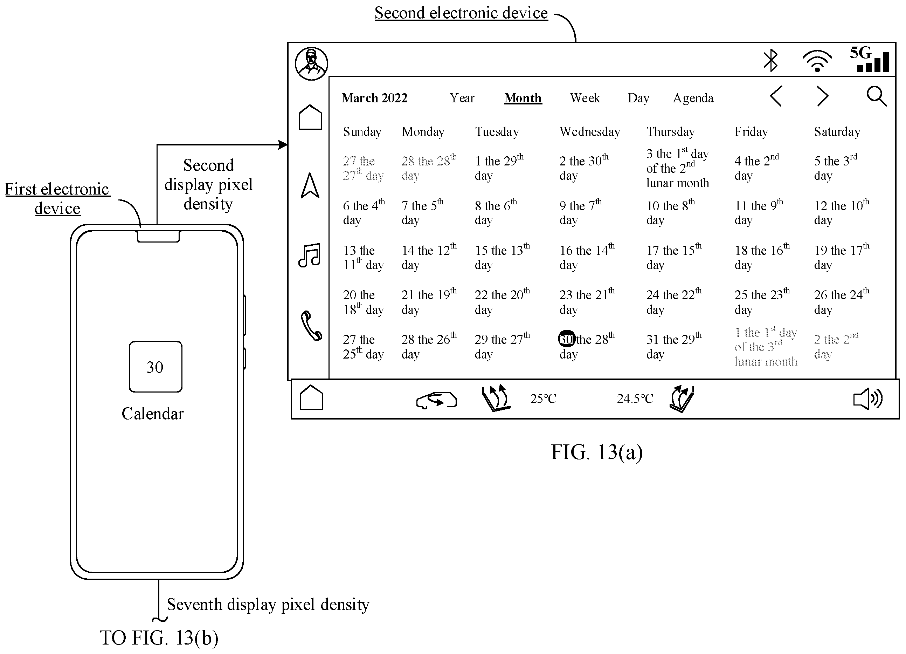

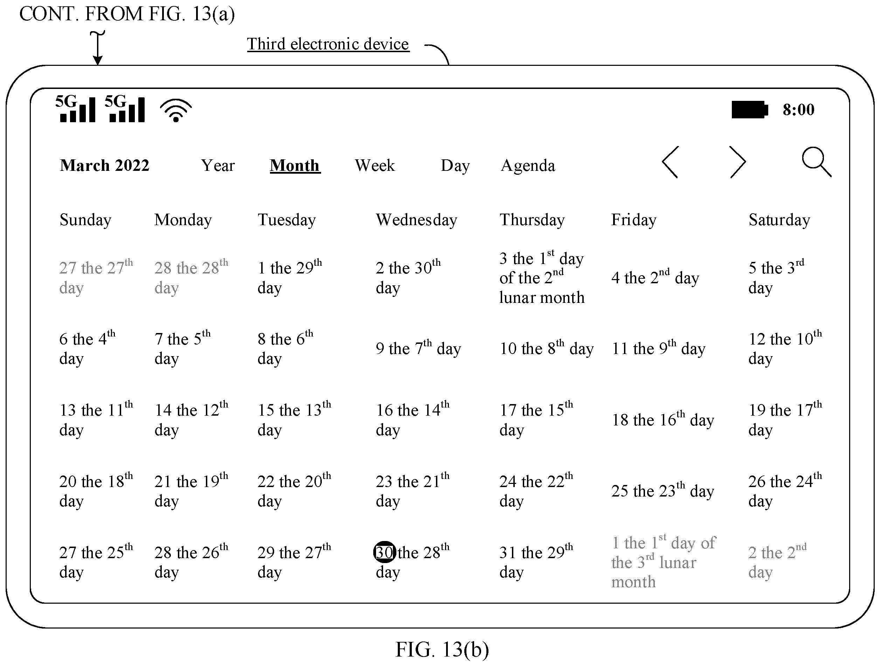

FIG. 13(a) and FIG. 13(b) are a diagram of a display effect of a projection display method according to an embodiment of this application by using an example in which the first electronic device is connected to the second electronic device for projection and is also connected to the third electronic device for projection. When the first application is projected onto the second electronic device, as shown in FIG. 13(a), the first electronic device projects the first application for display on the second electronic device based on the second display pixel density. When the first application is switched to the third electronic device for projection, as shown in FIG. 13(b), the first electronic device projects the first application for display on the third electronic device based on the seventh display pixel density. For example, the first application may be a calendar application. The second display pixel density may be different from the seventh display pixel density. For example, the second display pixel density is 240 dpi, and the seventh display pixel density is 320 dpi. Certainly, it may be understood that, in some embodiments, the second display pixel density and the seventh display pixel density may alternatively be the same.

In some embodiments, if the first electronic device includes the projection management module mentioned above, the second display pixel density and the seventh display pixel density may be stored in the projection management module. The first application includes the first resource module, and the first resource module runs in a process of the first application. In this case:

Before the first electronic device projects the first application for display on the second electronic device based on the second display pixel density, the method provided in this embodiment of this application may further include: The first electronic device obtains the second display pixel density from the projection management module via the first resource module.

Before the first electronic device projects the first application for display on the third electronic device based on the seventh display pixel density, the method provided in this embodiment of this application may further include: The first electronic device obtains the seventh display pixel density from the projection management module via the first resource module.

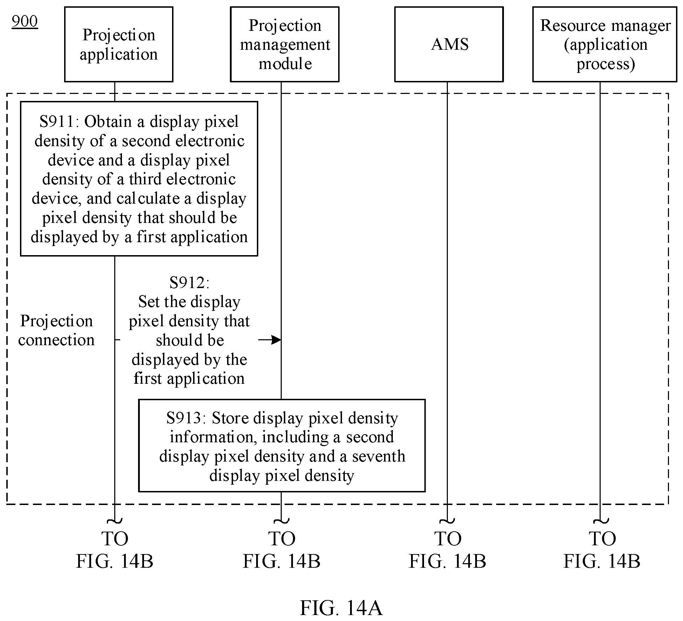

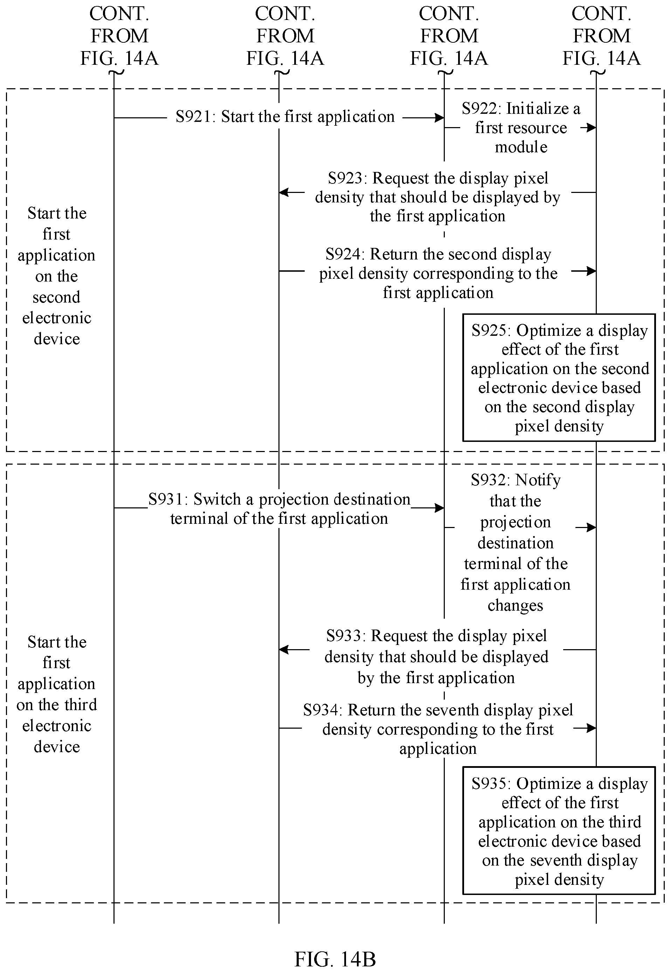

For ease of understanding, FIG. 14A and FIG. 14B are a schematic flowchart of a projection display method in the projection scenario shown in FIG. 13(a) and FIG. 13(b) by using an example in which the first electronic device includes the first application.

As shown in FIG. 14A, after the projection connection between the first electronic device and the second electronic device and the projection connection between the first electronic device and the third electronic device are completed in response to an operation of the user, the method 900 may include step S911 to step S913.

S911: The projection application on the first electronic device obtains the display pixel density of the second electronic device and the display pixel density of the third electronic device, and calculates the display pixel density that should be displayed by the first application.

The display pixel density that should be displayed by the first application herein includes a display pixel density of the first application used for projection onto the second electronic device and a display pixel density of the first application used for projection onto the third electronic device.

It may be understood that, when the first electronic device includes more applications that can be projected onto the second electronic device and the third electronic device, in this step, the projection application also calculates a display pixel density that should be displayed by another application. For example, the first electronic device may store, in a form of a list, display pixel densities corresponding to each application during projection onto different projection destination terminals.

S912: The projection application sets, via the projection management module, the display pixel density that should be displayed by the first application.

For example, the projection application sends, to the projection management module in a form of a list, display pixel densities of the applications during projection onto different projection destination terminals. The list includes the display pixel density that should be displayed by the first application.

S913: The projection management module stores display pixel density information.

For example, the display pixel density information includes the second display pixel density corresponding to the first application and the seventh display pixel density corresponding to the first application. The second display pixel density is used for projecting the first application for display on the second electronic device, and the seventh display pixel density is used for projecting the first application for display on the third electronic device.

Still refer to FIG. 14B. When the first application is started on the second electronic device in response to an operation of the user, the method 900 may further include step S921 to step S925.

S921: The projection application notifies the AMS to start the first application.

S922: The AMS initializes the first resource module via the resource manager.

S923: The resource manager (specifically, the first resource module) requests, from the projection management module, the display pixel density that should be displayed by the first application.

More specifically, the first resource module requests the display pixel density that should be displayed by the first application on the second electronic device. For example, the first resource module requests, based on a display ID of the second electronic device, the display pixel density that should be displayed by the first application on the second electronic device.

S924: The projection management module returns, to the resource manager (specifically, the first resource module), the second display pixel density corresponding to the first application.

S925: The resource manager (specifically, the first resource module) optimizes a display effect of the first application on the second electronic device based on the second display pixel density.

For example, in this step, the first resource module draws an interface of the first application based on the obtained second display pixel density.

Still refer to FIG. 14B. When the first application is switched to the third electronic device for projection display in response to an operation of the user, the method 900 may further include step S931 to step S935.

S931: The projection application indicates the AMS to switch a projection destination terminal of the first application.

S932: The AMS notifies the resource manager that the projection destination terminal of the first application changes.

In actual application, the first application may also detect that the projection destination terminal changes. Correspondingly, the first application may re-obtain, from the projection management module, a display pixel density of the first application displayed on the new projection destination terminal.

S933: The resource manager (specifically, the first resource module) requests, from the projection management module, the display pixel density that should be displayed by the first application.

More specifically, the first resource module requests the display pixel density that should be displayed by the first application on the third electronic device. For example, the first resource module requests, based on a display ID of the third electronic device, the display pixel density that should be displayed by the first application on the third electronic device.

S934: The projection management module returns, to the resource manager (specifically, the first resource module), the seventh display pixel density corresponding to the first application.

S935: The resource manager (specifically, the first resource module) optimizes a display effect of the first application on the third electronic device based on the seventh display pixel density.

For example, in this step, the first resource module redraws the interface of the first application based on the obtained seventh display pixel density.

According to the method shown in FIG. 14A and FIG. 14B, a same application can be switched and displayed on different projection screens, and display effects (specifically, display pixel densities that should be displayed by the application) of the application on different projection destination terminals may be different.

In conclusion, the current projection scenario, such as HiCar, Super Home Screen, and TV projection, involves specifications of a plurality of projection destination terminals, and display effects of different projection destination terminals may be different. In the projection display method provided in this embodiment of this application, after the projection connection is established, the projection source terminal obtains the display pixel density of the projection destination terminal. In this way, when projection of the application is started, the display pixel density that should be displayed by the application can be calculated, the display pixel density of each application displayed on each projection destination terminal is dynamically adjusted, to optimize a display effect of the application. In addition, the display pixel density of the application may be dynamically adjusted based on the display pixel density of the projection destination terminal. Therefore, different display pixel densities of the projection destination terminal have different display effects, and different data is transmitted between the projection source terminal and the projection destination terminal. A size of transmitted data can be reduced as required, and a transmission rate can be increased. In addition, the projection display method provided in this embodiment of this application is not limited to a one-to-one projection scenario, and may further support a one-to-many projection scenario.

It should be noted that, in this embodiment of this application, different projection destination terminals may be separated, or may be integrated into one device. For example, a head unit may include more than two projection screens. Correspondingly, the second electronic device in this application is a projection destination terminal, and the third electronic device is a projection destination terminal. The second electronic device and the third electronic device may be independent of each other, or may be integrated together.

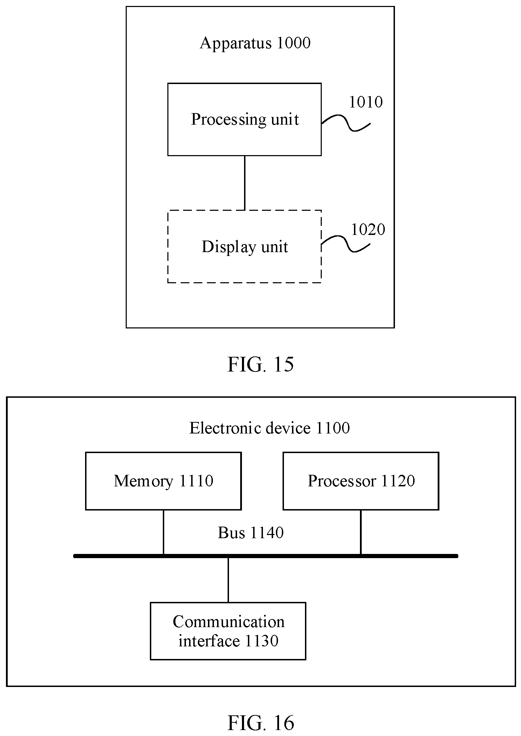

The foregoing describes in detail the projection display method provided in embodiments of this application with reference to FIG. 1 to FIG. 14B, and the following describes in detail apparatus embodiments of this application with reference to FIG. 15 and FIG. 16. It should be understood that descriptions of the method embodiments correspond to descriptions of the apparatus embodiments. Therefore, for a part that is not described in detail, refer to the foregoing method embodiments.

FIG. 15 is a diagram of a structure of an apparatus according to an embodiment of this application. The apparatus 1000 may be located in the first electronic device 101 shown in FIG. 1, or may be a specific example of the first electronic device 101. The apparatus 1000 can perform the steps in the method shown in FIG. 4 or FIG. 5, and may specifically implement embodiments shown in FIG. 7A to FIG. 14B. To avoid redundancy, details are not described again.

As shown in FIG. 15, the apparatus 1000 may include a processing unit 1010. The processing unit 1010 may be configured to perform steps in the method 400, 500, 600, 700, 800, or 900. For example, the processing unit 1010 is mainly configured to perform steps such as obtaining a display pixel density of a projection destination terminal, adjusting a display pixel density of an application, drawing an application interface, and projecting the application interface onto the projection destination terminal.

In some embodiments, the apparatus 1000 may include a display unit 1020. The display unit 1020 is configured to perform display-related steps such as displaying a window, displaying an application interface, and displaying a control.

FIG. 16 is a diagram of a structure of an electronic device according to an embodiment of this application. The electronic device 1100 shown in FIG. 16 may be a specific example of the first electronic device 101 in FIG. 1.

The electronic device 1100 shown in FIG. 16 includes a memory 1110, a processor 1120, a communication interface 1130, and a bus 1140. Communication connections between the memory 1110, the processor 1120, and the communication interface 1130 are implemented through the bus 1140.

The memory 1110 may be a read-only memory (read-only memory, ROM), a static storage device, a dynamic storage device, or a random access memory (random access memory, RAM). The memory 1110 may store a program. When the program stored in the memory 1110 is executed by the processor 1120, the processor 1120 is configured to perform the steps of the projection display method in embodiments of this application.

The processor 1120 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to perform the projection display method in embodiments of this application.

The processor 1120 may alternatively be an integrated circuit chip and has a signal processing capability. In an implementation process, the steps in the projection display method in this application may be implemented by using a hardware integrated logic circuit in the processor 1120 or instructions in a form of software. The processor 1120 may alternatively be a general-purpose processor, a digital signal processor (digital signal processor, DSP), an application-specific integrated circuit, a field programmable gate array (field programmable gate array, FPGA) or another programmable logic device, a discrete gate or a transistor logic device, or a discrete hardware component. The processor 1120 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the field, for example, a random access memory, a flash memory, a read-only memory, a programmable read-only memory, an electrically erasable programmable memory, or a register. The storage medium is located in the memory 1110. The processor 1120 reads information in the memory 1110, and performs the projection display method in embodiments of this application in combination with hardware of the processor 1120.

The communication interface 1130 uses, for example but not limited to, a transceiver apparatus of a transceiver type, to implement communication between the electronic device 1100 and another device or a communication network.

The bus 1140 may include a path for transferring information between components (for example, the memory 1110, the processor 1120, and the communication interface 1130) of the electronic device 1100.

An embodiment of this application further provides an electronic device, including one or more processors and one or more memories. The one or more memories store one or more computer programs. The one or more computer programs include instructions. When the instructions are executed by the one or more processors, the electronic device is enabled to perform the steps or specific embodiments in the methods shown in FIG. 4 to FIG. 14B.

An embodiment of this application further provides a readable storage medium, including computer instructions. When the computer instructions are run on an electronic device, the electronic device is enabled to perform the steps or specific embodiments in the methods shown in FIG. 4 to FIG. 14B.

An embodiment of this application further provides a projection system, including a first electronic device and a second electronic device. The first electronic device is connected to the second electronic device for projection. The first electronic device is configured to perform the steps or methods performed by the first electronic device in the foregoing embodiments, to perform projection display on the second electronic device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A projection display method, applied to a first electronic device, wherein the first electronic device is connected to a second electronic device for projection, and the method comprises:

   obtaining, by the first electronic device, a display pixel density of the second electronic device;
   adjusting, by the first electronic device, a display pixel density of a first application from a first display pixel density to a second display pixel density based on the display pixel density of the second electronic device, wherein the first display pixel density is determined based on a display pixel density of the first electronic device; and
   projecting, by the first electronic device, the first application for display on the second electronic device based on the second display pixel density.

2. The method according to claim 1, wherein

   the first display pixel density is used for displaying the first application on the first electronic device; and
   the second display pixel density is used for displaying the first application on the second electronic device.

3. The method according to claim 1 or 2, wherein the first electronic device comprises a projection management module, and the projection management module is accessible to any application on the first electronic device; and adjusting, by the first electronic device, the display pixel density of the first application from the first display pixel density to the second display pixel density based on the display pixel density of the second electronic device comprises:

   determining, by the first electronic device, the second display pixel density based on the display pixel density of the second electronic device; and
   storing, by the first electronic device, the second display pixel density in the projection management module.

4. The method according to claim 3, wherein the projection management module stores a first list, the first list comprises an application identifier and a display pixel density used for projection onto the second electronic device that correspond to each of at least one application, and the at least one application comprises the first application.

5. The method according to claim 3 or 4, wherein
   obtaining, by the first electronic device, the display pixel density of the second electronic device comprises:

   obtaining, by the first electronic device, the display pixel density of the second electronic device via the projection management module; and/or
   determining, by the first electronic device, the second display pixel density based on the display pixel density of the second electronic device comprises:
   determining, by the first electronic device, the second display pixel density via the projection management module.

6. The method according to any one of claims 3 to 5, wherein the first electronic device further comprises a projection application, and the projection application is used to implement projection between the first electronic device and the second electronic device; and
   obtaining, by the first electronic device, the display pixel density of the second electronic device comprises:

   obtaining, by the first electronic device, the display pixel density of the second electronic device via the projection application; and/or
   determining, by the first electronic device, the second display pixel density based on the display pixel density of the second electronic device comprises:
   determining, by the first electronic device, the second display pixel density via the projection application.

7. The method according to any one of claims 3 to 6, wherein the first application comprises a first resource module, the first resource module runs in a process of the first application, and before projecting, by the first electronic device, the first application for display on the second electronic device based on the second display pixel density, the method further comprises:
   obtaining, by the first electronic device, the second display pixel density from the projection management module via the first resource module.

8. The method according to any one of claims 1 to 7, wherein the second display pixel density is equal to the display pixel density of the second electronic device.

9. The method according to any one of claims 1 to 7, wherein adjusting, by the first electronic device, the display pixel density of the first application from the first display pixel density to the second display pixel density based on the display pixel density of the second electronic device comprises:
adjusting, by the first electronic device, the display pixel density of the first application from the first display pixel density to the second display pixel density based on the display pixel density of the second electronic device and an optimization coefficient.

10. The method according to claim 9, wherein the second display pixel density is equal to a product of the display pixel density of the second electronic device and the optimization coefficient.

11. The method according to any one of claims 1 to 7, wherein adjusting, by the first electronic device, the display pixel density of the first application from the first display pixel density to the second display pixel density based on the display pixel density of the second electronic device comprises:
adjusting, by the first electronic device, the display pixel density of the first application from the first display pixel density to the second display pixel density based on the display pixel density of the second electronic device, the display pixel density of the first electronic device, and an optimization coefficient.

12. The method according to claim 11, wherein the display pixel density of the first electronic device comprises an actual display pixel density and a default display pixel density; and
the second display pixel density is equal to a product of the display pixel density of the second electronic device, the optimization coefficient, and a ratio of the actual display pixel density of the first electronic device to the default display pixel density of the first electronic device.

13. The method according to any one of claims 9 to 12, wherein the optimization coefficient is determined based on at least one of a type of the first application, a user type, and a projection scenario.

14. The method according to any one of claims 9 to 13, wherein

when an interface element in the first application needs to be scaled up on the second electronic device, the optimization coefficient is greater than 1; or
when an interface element in the first application needs to be scaled down on the second electronic device, the optimization coefficient is less than 1.

15. The method according to any one of claims 1 to 14, wherein the method further comprises:

adjusting, by the first electronic device, a display pixel density of a second application from a third display pixel density to a fourth display pixel density based on the display pixel density of the second electronic device, wherein the third display pixel density is determined based on the display pixel density of the first electronic device; and
switching, by the first electronic device based on the fourth display pixel density, to display the second application on the second electronic device.

16. The method according to claim 15, wherein the first electronic device comprises the projection management module, the projection management module is accessible to any application on the first electronic device, the second display pixel density and the fourth display pixel density are stored in the projection management module, the first application comprises the first resource module, the first resource module runs in the process of the first application, the second application comprises a second resource module, and the second resource module runs in a process of the second application;
before projecting, by the first electronic device, the first application for display on the second electronic device based on the second display pixel density, the method further comprises:

obtaining, by the first electronic device, the second display pixel density from the projection management module via the first resource module; and
before switching, by the first electronic device based on the fourth display pixel density, to display the second application on the second electronic device, the method further comprises:
obtaining, by the first electronic device, the fourth display pixel density from the projection management module via the second resource module.

17. The method according to any one of claims 1 to 16, wherein the first electronic device is further connected to a third electronic device for projection, and the method further comprises:

obtaining, by the first electronic device, a display pixel density of the third electronic device;
adjusting, by the first electronic device, a display pixel density of a third application from a fifth display pixel density to a sixth display pixel density based on the display pixel density of the third electronic device, wherein the fifth display pixel density is determined based on the display pixel density of the first electronic device; and
projecting, by the first electronic device, the third application for display on the third electronic device based on the sixth display pixel density.

18. The method according to claim 17, wherein the first electronic device comprises the projection management module, the projection management module is accessible to any application on the first electronic device, the second display pixel density and the sixth display pixel density are stored in the projection management module, the first application comprises the first resource module, the first resource module runs in the process of the first application, the third application comprises a third resource module, and the third resource module runs in a process of the third application; before projecting, by the first electronic device, the first application for display on the second electronic device based on the second display pixel density, the method further comprises:

obtaining, by the first electronic device, the second display pixel density from the projection management module via the first resource module; and
before projecting, by the first electronic device, the third application for display on the third electronic device based on the sixth display pixel density, the method further comprises:
obtaining, by the first electronic device, the sixth display pixel density from the projection management module via the third resource module.

19. The method according to any one of claims 1 to 16, wherein the first electronic device is further connected to a third electronic device for projection, and the method further comprises:

obtaining, by the first electronic device, a display pixel density of the third electronic device;
determining, by the first electronic device, a seventh display pixel density based on the display pixel density of the third electronic device; and
when a projection interface of the first application is switched from the first electronic device to the third electronic device, projecting, by the first electronic device, the first application for display on the third electronic device based on the seventh display pixel density.

20. The method according to claim 19, wherein the first electronic device comprises the projection management module, the projection management module is accessible to any application on the first electronic device, the second display pixel density and the seventh display pixel density are stored in the projection management module, the first application comprises the first resource module, and the first resource module runs in the process of the first application;
before projecting, by the first electronic device, the first application for display on the second electronic device based on the second display pixel density, the method further comprises:

obtaining, by the first electronic device, the second display pixel density from the projection management module via the first resource module; and
before projecting, by the first electronic device, the first application for display on the third electronic device based on the seventh display pixel density, the method further comprises:
obtaining, by the first electronic device, the seventh display pixel density from the projection management module via the first resource module.

21. The method according to any one of claims 1 to 20, wherein the display pixel density is measured in dots per inch DPI.

22. An electronic device, comprising:

one or more processors; and
one or more memories, wherein

the one or more memories store one or more computer programs, the one or more computer programs comprise instructions, and when the instructions are executed by the one or more processors, the electronic device is enabled to perform the method according to any one of claims 1 to 21.

23. A computer-readable storage medium, comprising computer instructions, wherein when the computer instructions are run on an electronic device, the electronic device is enabled to perform the method according to any one of claims 1 to 21.

24. A computer program product, wherein when the computer program product runs on a computer, the computer is enabled to perform the method according to any one of claims 1 to 21.

25. A projection system, comprising a first electronic device and a second electronic device, wherein the first electronic device is connected to the second electronic device for projection, and the first electronic device is configured to perform the method according to any one of claims 1 to 21, to perform projection display on the second electronic device.

FIG. 1

Antenna 1      Electronic device 200      Antenna 2

| Mobile communication module 2G/3G/4G/5G [150] | | Wireless communication module BT/WLAN/GNSS/NFC/IR/FM [160] |

| Speaker [170A] | Audio module [170] | Processor [110] | Sensor module [180] |
| Receiver [170B] | | | Display [192] |
| Microphone [170C] | | | Camera [191] |
| Headset jack [170D] | | | Memory [120] |

| USB interface [130] | Charging management module [140] | Power management module [141] |

Charging input

Battery [142]

FIG. 2

| Application layer | Camera | Calendar | Maps | WLAN | Music | Messages |
|---|---|---|---|---|---|---|
| | Gallery | Phone | Navigation | Bluetooth | Video | ... |

| Application framework layer | Window manager | Content provider | Phone manager | Resource manager | |
|---|---|---|---|---|---|
| | Notification manager | View system | Activity manager | Projection management module | ... |

| System library | Surface manager | Three-dimensional graphics processing library | | |
|---|---|---|---|---|
| | Two-dimensional graphics engine | Media library | Image processing library | ... |

| Kernel layer | Display driver | Camera driver | Bluetooth driver |
|---|---|---|---|
| | Audio driver | Sensor driver | ... |

FIG. 3

400

```
┌─────────────────────────┐                        ┌─────────────────────────┐
│  First electronic device│                        │ Second electronic device│
└─────────────────────────┘                        └─────────────────────────┘
             │                                                   │
┌────────────────────────────────┐                              │
│ S410: Obtain a display pixel    │                             │
│ density of the second          │                              │
│ electronic device              │                              │
└────────────────────────────────┘                              │
             │                                                   │
┌────────────────────────────────┐                              │
│ S420: Adjust a display pixel    │                             │
│ density of a first application  │                             │
│ from a first display pixel     │                              │
│ density to a second display    │                              │
│ pixel density based on the     │                              │
│ display pixel density of the   │                              │
│ second electronic device       │                              │
└────────────────────────────────┘                              │
```

S430: Project the first application for display
on the second electronic device based on the
second display pixel density

FIG. 4

500

First electronic device

| Projection application | Projection management module | First resource module |

Second electronic device

S510: Obtain a display pixel density of the second electronic device

S520: Determine a second display pixel density based on the display pixel density of the second electronic device

S530: Second display pixel density →

S540: Store the second display pixel density

S550: Second display pixel density →

S560: Draw an interface of a first application based on the second display pixel density

S570: Interface of the first application →

FIG. 5

Projection application

First application
(first resource module)

Transfer information
through a first interface

Obtain information through
a second interface

Projection management module
(for example, a multi-screen
framework)

FIG. 6

600

| First electronic device | | | Second electronic device |
|---|---|---|---|
| First projection application | First application | Projection management module | Second projection application |

S601: Start

S602: Connect to the second electronic device →

S603: Display the first projection application

← S604: The connection succeeds

← S605: Display pixel density of the second electronic device

S606: Determine, based on the display pixel density of the second electronic device, a display pixel density used by each application for projection

S607: Write data →

S608: Write a display identifier and the display pixel density used by each application for projection

S609: Start the first application

← S610: Start the first application on the first electronic device

TO FIG. 7B

TO FIG. 7B

TO FIG. 7B

TO FIG. 7B

FIG. 7A

CONT.
FROM
FIG. 7A

CONT.
FROM
FIG. 7A

CONT.
FROM
FIG. 7A

CONT.
FROM
FIG. 7A

S611: Invoke the projection
management module

←— S612: Read data —

S613: Determine, based on an
identifier of a display that currently
displays the first application, a
second display pixel density used
for projection display of the first
application

S614: Determine a resource adapted
to the second display pixel density

S615:
Return the
resource
adapted to the
second display
pixel density

— S616: Resource adapted to the second display pixel density —→

S617: Display the
first application

S618: Disconnect

———— S619: Clear data ————→

S620: Clear the display
identifier and the display
pixel density used by each
application for projection

←—— S621: Close the ——
application

S622: Close

FIG. 7B

FIG. 8(a)

EP 4 625 139 A1

FIG. 8(b)

EP 4 625 139 A1

EP 4 625 139 A1

**March 2022**    Year    **Month**    Week    Day    Agenda    $<$  $>$  🔍

| Sunday | Monday | Tuesday | Wednesday | Thursday | Friday | Saturday |
|---|---|---|---|---|---|---|
| 27 the 27$^{th}$ day | 28 the 28$^{th}$ day | 1 the 29$^{th}$ day | 2 the 30$^{th}$ day | 3 the 1$^{st}$ day of the 2$^{nd}$ lunar month | 4 the 2$^{nd}$ day | 5 the 3$^{rd}$ day |
| 6 the 4$^{th}$ day | 7 the 5$^{th}$ day | 8 the 6$^{th}$ day | 9 the 7$^{th}$ day | 10 the 8$^{th}$ day | 11 the 9$^{th}$ day | 12 the 10$^{th}$ day |
| 13 the 11$^{th}$ day | 14 the 12$^{th}$ day | 15 the 13$^{th}$ day | 16 the 14$^{th}$ day | 17 the 15$^{th}$ day | 18 the 16$^{th}$ day | 19 the 17$^{th}$ day |
| 20 the 18$^{th}$ day | 21 the 19$^{th}$ day | 22 the 20$^{th}$ day | 23 the 21$^{th}$ day | 24 the 22$^{th}$ day | 25 the 23$^{th}$ day | 26 the 24$^{th}$ day |
| 27 the 25$^{th}$ day | 28 the 26$^{th}$ day | 29 the 27$^{th}$ day | 30 the 28$^{th}$ day | 31 the 29$^{th}$ day | 1 the 1$^{st}$ day of the 3$^{rd}$ lunar month | 2 the 2$^{nd}$ day |

25°C    24.5°C

FIG. 8(c)

EP 4 625 139 A1

**March 2022**　　　　　　　　Year　**Month**　Week　Day　Agenda　　　〈　　〉　　🔍

| Sunday | Monday | Tuesday | Wednesday | Thursday | Friday | Saturday |
|---|---|---|---|---|---|---|
| 27 the 27$^{th}$ day | 28 the 28$^{th}$ day | 1 the 29$^{th}$ day | 2 the 30$^{th}$ day | 3 the 1$^{st}$ day of the 2$^{nd}$ lunar month | 4 the 2$^{nd}$ day | 5 the 3$^{rd}$ day |
| 6 the 4$^{th}$ day | 7 the 5$^{th}$ day | 8 the 6$^{th}$ day | 9 the 7$^{th}$ day | 10 the 8$^{th}$ day | 11 the 9$^{th}$ day | 12 the 10$^{th}$ day |
| 13 the 11$^{th}$ day | 14 the 12$^{th}$ day | 15 the 13$^{th}$ day | 16 the 14$^{th}$ day | 17 the 15$^{th}$ day | 18 the 16$^{th}$ day | 19 the 17$^{th}$ day |
| 20 the 18$^{th}$ day | 21 the 19$^{th}$ day | 22 the 20$^{th}$ day | 23 the 21$^{th}$ day | 24 the 22$^{th}$ day | 25 the 23$^{th}$ day | 26 the 24$^{th}$ day |
| 27 the 25$^{th}$ day | 28 the 26$^{th}$ day | 29 the 27$^{th}$ day | 30 the 28$^{th}$ day | 31 the 29$^{th}$ day | 1 the 1$^{st}$ day of the 3$^{rd}$ lunar month | 2 the 2$^{nd}$ day |

25°C　　　24.5°C

FIG. 8(d)

Message

Search

Recommendations 30% off

Billion Yuan Subsidy

International Brands

5G

25°C 24.5°C

FIG. 9(a)

Second electronic device

Second display pixel density

First electronic device

Shopping

30

Calendar

TO FIG. 9(b)

Fourth display
pixel density

EP 4 625 139 A1

Second electronic
device

**March 2022**     Year  **Month**  Week  Day  Agenda   <   >   🔍

| Sunday | Monday | Tuesday | Wednesday | Thursday | Friday | Saturday |
|---|---|---|---|---|---|---|
| 27 the 27th day | 28 the 28th day | 1 the 29th day | 2 the 30th day | 3 the 1st day of the 2nd lunar month | 4 the 2nd day | 5 the 3rd day |
| 6 the 4th day | 7 the 5th day | 8 the 6th day | 9 the 7th day | 10 the 8th day | 11 the 9th day | 12 the 10th day |
| 13 the 11th day | 14 the 12th day | 15 the 13th day | 16 the 14th day | 17 the 15th day | 18 the 16th day | 19 the 17th day |
| 20 the 18th day | 21 the 19th day | 22 the 20th day | 23 the 21th day | 24 the 22th day | 25 the 23th day | 26 the 24th day |
| 27 the 25th day | 28 the 26th day | 29 the 27th day | 30 the 28th day | 31 the 29th day | 1 the 1st day of the 3rd lunar month | 2 the 2nd day |

25°C          24.5°C

FIG. 9(b)

| 700 | Projection application | Projection management module | AMS | Resource manager (application process) |

S711: Obtain a display pixel density of a second electronic device, and calculate display pixel densities that should be displayed by a first application and a second application

Projection connection

S712: Set the display pixel densities that should be displayed by the first application and the second application

S713: Store display pixel density information, including a second display pixel density and a fourth display pixel density

TO FIG. 10B     TO FIG. 10B     TO FIG. 10B     TO FIG. 10B

FIG. 10A

CONT.
FROM
FIG. 10A

CONT.
FROM
FIG. 10A

CONT.
FROM
FIG. 10A

CONT.
FROM
FIG. 10A

S721: Start the first application

S722: Initialize a first resource module

S723: Request the display pixel density that should be displayed by the first application

S724: Return the second display pixel density corresponding to the first application

Start the first application

S725: Optimize a display effect of the first application based on the second display pixel density

S731: Start the second application

S732: Initialize a second resource module

S733: Request the display pixel density that should be displayed by the second application

S734: Return the fourth display pixel density corresponding to the second application

Start the second application

S735: Optimize a display effect of the second application based on the fourth display pixel density

FIG. 10B

Second electronic device

Second display pixel density

First electronic device

Message

Search

Recommendations    30% off    Billion Yuan Subsidy    International Brands

25°C    24.5°C

FIG. 11(a)

Shopping

30

Calendar

TO
FIG. 11(b)

EP 4 625 139 A1

Sixth display
pixel density

Third electronic
device

EP 4 625 139 A1

| | March 2022 | Year | **Month** | Week | Day | Agenda | ‹ › ○ |
|---|---|---|---|---|---|---|---|
| | Sunday | Monday | Tuesday | Wednesday | Thursday | Friday | Saturday |
| | 27 the 27$^{th}$ day | 28 the 28$^{th}$ day | 1 the 29$^{th}$ day | 2 the 30$^{th}$ day | 3 the 1$^{st}$ day of the 2$^{nd}$ lunar month | 4 the 2$^{nd}$ day | 5 the 3$^{rd}$ day |
| | 6 the 4$^{th}$ day | 7 the 5$^{th}$ day | 8 the 6$^{th}$ day | 9 the 7$^{th}$ day | 10 the 8$^{th}$ day | 11 the 9$^{th}$ day | 12 the 10$^{th}$ day |
| | 13 the 11$^{th}$ day | 14 the 12$^{th}$ day | 15 the 13$^{th}$ day | 16 the 14$^{th}$ day | 17 the 15$^{th}$ day | 18 the 16$^{th}$ day | 19 the 17$^{th}$ day |
| | 20 the 18$^{th}$ day | 21 the 19$^{th}$ day | 22 the 20$^{th}$ day | 23 the 21$^{st}$ day | 24 the 22$^{nd}$ day | 25 the 23$^{rd}$ day | 26 the 24$^{th}$ day |
| | 27 the 25$^{th}$ day | 28 the 26$^{th}$ day | 29 the 27$^{th}$ day | 30 the 28$^{th}$ day | 31 the 29$^{th}$ day | 1 the 1$^{st}$ day of the 3$^{rd}$ lunar month | 2 the 2$^{nd}$ day |

25°C    24.5°C

FIG. 11(b)

800

| Projection application | Projection management module | AMS | Resource manager (application process) |

S811: Obtain a display pixel density of a second electronic device and a display pixel density of a third electronic device, and calculate display pixel densities that should be displayed by a first application and a third application

Projection connection

S812: Set the display pixel densities that should be displayed by the first application and the third application

S813: Store display pixel density information, including a second display pixel density and a sixth display pixel density

TO
FIG. 12B

TO
FIG. 12B

TO
FIG. 12B

TO
FIG. 12B

FIG. 12A

52

CONT.
FROM
FIG. 12A

CONT.
FROM
FIG. 12A

CONT.
FROM
FIG. 12A

CONT.
FROM
FIG. 12A

S821: Start the first application →

S822: Initialize a
first resource
module →

S823: Request the display pixel
density that should be displayed
by the first application

S824: Return the second display
pixel density corresponding to
the first application →

S825: Optimize a display
effect of the first
application on the second
electronic device based
on the second display
pixel density

Start the
first
application
on the
second
electronic
device

S831: Start the third application →

S832: Initialize a
third resource
module →

S833: Request the display pixel
density that should be displayed by
the third application

S834: Return the sixth display
pixel density corresponding to the
third application →

S835: Optimize a display
effect of the third
application on the third
electronic device based
on the sixth display pixel
density

Start the
third
application
on the third
electronic
device

FIG. 12B

FIG. 13(a)

CONT. FROM FIG. 13(a)

EP 4 625 139 A1

Third electronic device

5G ▂▃▄ 5G ▂▃▄ 📶                                                      ▮ 8:00

**March 2022**          Year     **Month**     Week      Day     Agenda          ‹   ›   🔍

| Sunday | Monday | Tuesday | Wednesday | Thursday | Friday | Saturday |
|---|---|---|---|---|---|---|
| 27 the 27th day | 28 the 28th day | 1 the 29th day | 2 the 30th day | 3 the 1st day of the 2nd lunar month | 4 the 2nd day | 5 the 3rd day |
| 6 the 4th day | 7 the 5th day | 8 the 6th day | 9 the 7th day | 10 the 8th day | 11 the 9th day | 12 the 10th day |
| 13 the 11th day | 14 the 12th day | 15 the 13th day | 16 the 14th day | 17 the 15th day | 18 the 16th day | 19 the 17th day |
| 20 the 18th day | 21 the 19th day | 22 the 20th day | 23 the 21th day | 24 the 22th day | 25 the 23th day | 26 the 24th day |
| 27 the 25th day | 28 the 26th day | 29 the 27th day | ㉚ the 28th day | 31 the 29th day | 1 the 1st day of the 3rd lunar month | 2 the 2nd day |

FIG. 13(b)

900 | Projection application | Projection management module | AMS | Resource manager (application process)

S911: Obtain a display pixel density of a second electronic device and a display pixel density of a third electronic device, and calculate a display pixel density that should be displayed by a first application

Projection connection

S912: Set the display pixel density that should be displayed by the first application

S913: Store display pixel density information, including a second display pixel density and a seventh display pixel density

TO FIG. 14B | TO FIG. 14B | TO FIG. 14B | TO FIG. 14B

FIG. 14A

CONT.
FROM
FIG. 14A

CONT.
FROM
FIG. 14A

CONT.
FROM
FIG. 14A

CONT.
FROM
FIG. 14A

———— S921: Start the first application ————→ S922: Initialize a
first resource →
module

Start the
first
application
on the
second
electronic
device

S923: Request the display pixel
←———— density that should be displayed by
the first application

S924: Return the second display
———— pixel density corresponding to the →
first application

S925: Optimize a display
effect of the first
application on the second
electronic device based
on the second display
pixel density

S932: Notify
that the
S931: Switch a projection destination projection
————————————————————————————→ destination →
terminal of the first application terminal of the
first application
changes

Start the
first
application
on the third
electronic
device

S933: Request the display pixel
←———— density that should be displayed
by the first application

S934: Return the seventh display pixel
———— density corresponding to the first →
application

S935: Optimize a display
effect of the first
application on the third
electronic device based
on the seventh display
pixel density

FIG. 14B

Apparatus 1000

Processing unit 1010

Display unit 1020

FIG. 15

Electronic device 1100

Memory 1110

Processor 1120

Bus 1140

Communication interface 1130

FIG. 16

## INTERNATIONAL SEARCH REPORT

| | |
|---|---|
| | International application No. |
| | **PCT/CN2023/133622** |

| | |
|---|---|
| **A.** | **CLASSIFICATION OF SUBJECT MATTER** |
| | G06F3/14(2006.01)i |

According to International Patent Classification (IPC) or to both national classification and IPC

| | |
|---|---|
| **B.** | **FIELDS SEARCHED** |

Minimum documentation searched (classification system followed by classification symbols)

    IPC:G06F

Documentation searched other than minimum documentation to the extent that such documents are included in the fields searched

Electronic data base consulted during the international search (name of data base and, where practicable, search terms used)

    CNABS, CNTXT, CNKI, DWPI, USTXT, ENTXT, WOTXT, EPTXT: 像素密度, 显示, 应用, 调整, 投屏, 投射, 传输, pixel density, display, app, application, adjust, projection, transmit

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | US 2015346973 A1 (APPLE INC.) 03 December 2015 (2015-12-03)<br>    description, paragraphs 140-206, and figures 1-11 | 1-25 |
| X | CN 114356258 A (HUAWEI TECHNOLOGIES CO., LTD.) 15 April 2022 (2022-04-15)<br>    description, paragraphs 105-290, and figures 1-15(b) | 1-25 |
| A | US 2018286306 A1 (INTEL CORP.) 04 October 2018 (2018-10-04)<br>    entire document | 1-25 |
| A | CN 114115769 A (HUAWEI TECHNOLOGIES CO., LTD.) 01 March 2022 (2022-03-01)<br>    entire document | 1-25 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 February 2024** | **26 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/133622**

| Patent document cited in search report | | | Publication date (day/month/year) | Patent family member(s) | | | Publication date (day/month/year) |
|---|---|---|---|---|---|---|---|
| US | 2015346973 | A1 | 03 December 2015 | None | | | |
| CN | 114356258 | A | 15 April 2022 | None | | | |
| US | 2018286306 | A1 | 04 October 2018 | US | 10372196 | B2 | 06 August 2019 |
| CN | 114115769 | A | 01 March 2022 | CN | 114115769 | B | 29 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211740315

- CN 202310254234